# EUROPEAN PATENT APPLICATION

(11) **EP 4 539 384 A1**
(43) Date of publication of application: **16.04.2025**
(21) Application number: 23831979.2
(22) Date of filing: 26.06.2023
(51) Int. Cl.: H04L 5/14, H04L 5/00, H04W 8/24, H04W 72/23, H04W 72/21, H04W 72/04

(54) **DEVICE AND METHOD FOR TRANSMITTING/RECEIVING SIGNAL ON BASIS OF CROSS DIVISION DUPLEX (XDD) IN WIRELESS COMMUNICATION SYSTEM**

(30) Priority: 27.06.2022 KR 20220078482; 08.08.2022 KR 20220098501
(71) Applicant: Samsung Electronics Co., Ltd., Suwon-si, Gyeonggi-do 16677 (KR)
(72) Inventor: AN, Chanho, Suwon-si Gyeonggi-do 16677 (KR); KWUN, Jonghyung, Suwon-si Gyeonggi-do 16677 (KR); LEE, Jinhyuk, Suwon-si Gyeonggi-do 16677 (KR); KIM, Jonghyune, Suwon-si Gyeonggi-do 16677 (KR); KIM, Taekhoon, Suwon-si Gyeonggi-do 16677 (KR); YANG, Jinwoo, Suwon-si Gyeonggi-do 16677 (KR); JI, Hyoungju, Suwon-si Gyeonggi-do 16677 (KR); CHOI, Seunghoon, Suwon-si Gyeonggi-do 16677 (KR); CHOI, Youngkyu, Suwon-si Gyeonggi-do 16677 (KR)
(74) Representative: HGF
(86) International application number: PCT/KR2023/095024
(87) International publication number: WO 2024/005621

(57) **Abstract**

The present disclosure relates to a 5G or 6G communication system for supporting higher data transmission rates. A method performed by a base station supporting a time division duplex (TDD) system in a wireless communication system, according to various embodiments of the present disclosure, may comprise the steps of: transmitting, to a terminal, resource configuration information including a first cross division duplex-uplink (XDD-UL) section; determining whether a change of the first XDD-UL section is necessary; identifying a second XDD-UL section on the basis of the determination result; transmitting, to the terminal, information about the second XDD-UL section; and receiving, from the terminal, an uplink signal on the basis of the first XDD-UL section and/or the second XDD-UL section.

## Description

### [Technical Field]

The disclosure generally relates to a wireless communication system and, more specifically, to a device and a method for efficiently transmitting or receiving a signal between a base station and a UE in a cross division duplex (XDD) system.

### [Background Art]

Considering the development of wireless communication from generation to generation, the technologies have been developed mainly for services targeting humans, such as voice calls, multimedia services, and data services. Following the commercialization of 5G (5th generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bit per second (bps) and a radio latency less than 100µsec, and thus will be 50 times as fast as 5G communication systems and have the 1/10 radio latency thereof.

In order to accomplish such a high data rate and an ultra-low latency, it has been considered to implement 6G communication systems in a terahertz (THz) band (for example, 95 gigahertz (GHz) to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, Radio Frequency (RF) elements, antennas, novel waveforms having a better coverage than Orthogonal Frequency Division Multiplexing (OFDM), beamforming and massive Multiple-input Multiple-Output (MIMO), Full Dimensional MIMO (FD-MIMO), array antennas, and multi antenna transmission technologies such as large-scale antennas. In addition, there has been ongoing discussion on new technologies for improving the coverage of terahertz-band signals, such as metamaterial-based lenses and antennas, Orbital Angular Momentum (OAM), and Reconfigurable Intelligent Surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, High-Altitude Platform Stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; an use of Artificial Intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable super-high-performance communication and computing resources (such as Mobile Edge Computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive eXtended Reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

In a wireless communications system, a UE may receive a downlink and transmit an uplink, based on a resource configuration configured by a base station. In addition, as a method for transmitting an uplink signal and a downlink signal between the base station and the UE, frequency division duplex (FDD) and time division duplex (TDD) may be used. In a TDD system, when the resource demands for the uplink and downlink between the base station and the UE are asymmetric, an operation method for increasing transmission efficiency while reducing latency is required.

### [Disclosure of Invention]

### [Technical Problem]

Upon the above-described discussion, the disclosure is to provide a device and a method for effectively transmitting and receiving a signal in a wireless communication system.

More specifically, the disclosure relates to a cross division duplex (XDD) system, and provides a device and a method for efficiently transmitting and receiving a signal between a base station and a UE by adaptively changing a resource period allocated to the frequency band.

### [Solution to Problem]

According to various embodiments of the disclosure, a method performed by a base station supporting a time division duplex (TDD) system in a wireless communication system may include transmitting resource configuration information including a first cross division duplex-uplink (XDD-UL) period to a terminal, determining whether a change of the first XDD-UL period is necessary, identifying, based on a result of the determination, a second XDD-UL period, transmitting information on the second XDD-UL period to the terminal, and receiving, based on at least one of the first XDD-UL period or the second XDD-UL period, an uplink signal from the terminal.

According to various embodiments of the disclosure, a method performed by a terminal supporting a time division duplex (TDD) system in a wireless communication system may include transmitting terminal capability information for XDD system support to a base station, receiving resource configuration information including a first cross division duplex-uplink (XDD-UL) period from the base station, receiving, from the base station, information on whether a change of the first XDD-UL period is necessary based on the resource configuration information, transmitting information for requesting the change of the first XDD-UL period to the base station, receiving, from the base station, information on a second XDD-UL period identified by the base station, and transmitting, based on at least one of the first XDD-UL period or the second XDD-UL period, an uplink signal to the base station, wherein the information for requesting the change of the first XDD-UL period may include information related to an XDD-UL period preferred by the terminal.

According to various embodiments of the disclosure, a base station supporting a time division duplex (TDD) system in a wireless communication system may include at least one transceiver, and at least one processor functionally coupled to the at least one transceiver, wherein the at least one processor is configured to transmit resource configuration information including a first cross division duplex-uplink (XDD-UL) period to a terminal, determine whether a change of the first XDD-UL period is necessary, identify, based on a result of the determination, a second XDD-UL period, transmit information on the second XDD-UL period to the terminal, and receive, based on at least one of the first XDD-UL period or the second XDD-UL period, an uplink signal from the terminal.

According to various embodiments of the disclosure, a terminal supporting a time division duplex (TDD) system in a wireless communication system may include at least one transceiver and at least one processor functionally coupled to the at least one transceiver, wherein the at least one processor is configured to transmit, to a base station, terminal capability information for XDD system support, receive resource configuration information including first cross division duplex-uplink (XDD-UL) period from the base station, receive, based on the resource configuration information, information on whether a change of the first XDD-UL period is necessary from the base station, transmit information for requesting the change of the first XDD-UL period to the base station, receive information on a second XDD-UL period identified by the base station from the base station, and transmit, based on at least one of the first XDD-UL period or the second XDD-UL period, an uplink signal to the base station, wherein the information for requesting the change of the first XDD-UL period includes information related to an XDD-UL period preferred by the terminal.

### [Advantageous Effects of Invention]

The disclosure provides a device and a method capable of effectively providing services in a wireless communication system.

The disclosure provides a device and a method capable of effectively performing signal transmission and reception in a wireless communication system.

The disclosure provides a device and a method for, when a change of a bandwidth is necessary in a wireless communication system employing cross division duplex (XDD), adaptively changing an XDD resource period to efficiently transmit or receive a signal also in the changed bandwidth.

Advantageous effects obtainable from the disclosure may not be limited to the above-mentioned effects, and other effects which are not mentioned may be clearly understood, through the following descriptions, by those skilled in the art to which the disclosure pertains.

### [Brief Description of Drawings]

FIG. 1 illustrates an example of a wireless communication environment according to embodiments of the disclosure.
FIG. 2 illustrates an example of a radio resource area in a wireless communication system according to embodiments of the disclosure.
FIG. 3 illustrates an example of a bandwidth part configuration in a wireless communication system according to embodiments of the disclosure;
FIG. 4 illustrates various examples of a frequency division duplex (FDD) scheme, a time division duplex (TDD) scheme, and a cross division duplex (XDD) scheme in a wireless communication system according to various embodiments of the disclosure.
FIG. 5 illustrates an example of including a frequency band unavailable in a wireless communication system according to embodiments of the disclosure.
FIG. 6 illustrates various examples of changing an XDD period according to various embodiments of the disclosure.
FIG. 7A is a flow chart illustrating an operation of a base station for signal transmission and reception based on a changed XDD period according to various embodiments of the disclosure.
FIG. 7B is a detailed flow chart illustrating an operation of a base station for signal transmission and reception based on a changed XDD period according to various embodiments of the disclosure.
FIG. 8A is a flow chart illustrating an operation of a UE for signal transmission and reception based on a changed XDD period according to various embodiments of the disclosure.
FIG. 8B is a detailed flow chart illustrating an operation of a UE for signal transmission and reception based on a changed XDD period according to various embodiments of the disclosure.
FIG. 9 illustrates a functional configuration of a base station in a wireless communication system according to various embodiments of the disclosure
FIG. 10 illustrates a functional configuration of a UE in a wireless communication system according to various embodiments of the disclosure.

### [Mode for the Invention]

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software. In addition, terms referring to network entities, terms referring to device elements, and the like are illustratively used for the sake of descriptive convenience. Therefore, the disclosure is not limited by the terms as described below, and other terms referring to subjects having equivalent technical meanings may be used.

In the following description, terms referring to parameters related to representation of data (e.g., target object, data time interval, resource level, and data type level), terms referring to network entities, terms referring to device elements (appropriately modified according to the disclosure), and the like are illustratively used for the sake of descriptive convenience. Therefore, the disclosure is not limited by the terms as described below, and other terms referring to subjects having equivalent technical meanings may be used.

Furthermore, various embodiments of the disclosure will be described using terms used in some communication standards (e.g., the 3rd generation partnership project (3GPP)), but they are for illustrative purposes only. Various embodiments of the disclosure may be easily applied to other communication systems through modifications. Various embodiments of the disclosure may cover all technologies using TDD and FDD together, including not only Study on Evolution of NR Duplex Operation of Rel-18 on the 3GPP LTE standards but also Enhanced Release and Versions to be progressed later.

The technology as described below may be applied to various radio access systems, such as code division multiple access (CDMA), frequency division multiple access (FDMA), time division multiple access (TDMA), orthogonal frequency division multiple access (OFDMA), single carrier frequency division multiple access (SC- FDMA). CDMA may be implemented by radio technology such as universal terrestrial radio access (UTRA) or CDMA2000. TDMA may be implemented by radio technology such as global system for mobile communications (GSM), general packet radio service (GPRS), or enhanced data rates for GSM evolution (EDGE). OFDMA may be implemented by radio technology such as IEEE 802.11 (i.e., Wi-Fi), IEEE 802.16 (i.e., WiMAX), IEEE 802-20, or Evolved UTRA (E-UTRA). To clearly describe the disclosure, the following description is mainly directed to 3GPP NR, but the technical idea of the disclosure is not limited thereto.

In addition, as used in the disclosure, the expression "greater than" or "less than" is used to determine whether a specific condition is satisfied or fulfilled, but this is intended only to illustrate an example and does not exclude "greater than or equal to" or "equal to or less than". A condition indicated by the expression "greater than or equal to" may be replaced with a condition indicated by "greater than", a condition indicated by the expression "equal to or less than" may be replaced with a condition indicated by "less than", and a condition indicated by "greater than and equal to or less than" may be replaced with a condition indicated by "greater than and less than".

In the following description, terms referring to signals, terms referring to channels, terms referring to control information, terms referring to network entities, terms referring to device elements, and the like are illustratively used for the sake of descriptive convenience. Therefore, the disclosure is not limited by the terms as described below, and other terms referring to subjects having equivalent technical meanings may be used.

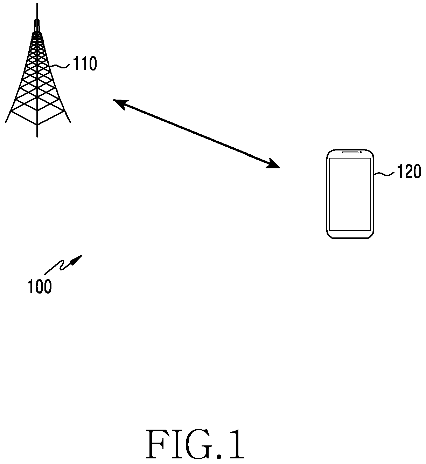

FIG. 1 illustrates an example of a radio communication environment 100 according to various embodiments of the disclosure. Referring to FIG. 1, a base station 110 and a UE 120 are illustrated as parts of nodes using a radio channel in a wireless communication system. The UE 120 may be connected to a plurality of base stations. Although not illustrated in FIG. 1, base stations may be connected to the UE 120 through multiple connectivity (for example, dual connectivity (DC)).

The base station 110 is a network infrastructure that provides radio access to the UE 120. The base station 110 has coverage defined in a predetermined geographical area on the basis of the range within which a signal can be transmitted. The term "coverage" used below may indicate a service coverage area of the base station 110. The base station 110 may cover one cell or multiple cells. Here, the multiple cells may be divided by a frequency supporting multiple cells or an area of a covered sector.

The base station 110 may be referred to as "access point (AP)", "eNodeB (eNB)", "5^{th}-generation (5G) node", "5G NodeB (NB)", "next generation node B (gNB)", "wireless point", "transmission/reception point (TRP)", "distributed unit (DU)", "a radio unit (RU)", "remote radio head (RRH)", or other terms having an equivalent technical meaning, as well as a base station. According to various embodiments, the base station 110 may be connected to one or more "transmission/reception points (TRPs)". The base station 110 may transmit a downlink signal to the UE 120 or receive an uplink signal from the UE 120 through one or more TRPs.

The UE 120 is a device used by a user and performs communication with the base station 110 through a radio channel. According to circumstances, the UE 120 may be operated without involvement of the user. That is, at least one of the UEs 120 may be a device that performs machine-type communication (MTC), and may not be carried by the user. The UE 120 may be referred to as "user equipment (UE)", "mobile station", "subscriber station", "customer premises equipment (CPE)", "remote terminal", "wireless terminal", "electronic device", "terminal for vehicle", "user device", or other terms having the equivalent technical meaning, as well as a terminal.

Various embodiments of the disclosure provide a method and a device for operating based a configuration of a TDD communication system. Accordingly, hereinafter, a detailed method for uplink and downlink signal transmission in the TDD communication system is described.

Carrier aggregation (CA) technology is a technology introduced to 3GPP standard release 10. CA is a technology in which the UE is connected to the same type of wireless communication cell group having a common wireless resource control entity to simultaneously use frequency resources on component carriers of respective cells located in different frequency bands for signal transmission and reception, thereby increasing the frequency use efficiency of the UE and the base station. A dual connectivity (DC) technology, which is a type of multi-connectivity, has been introduced from 3^{rd} Generation Partnership Project (3GPP) standard release 12. The dual connectivity technology is a technology for enhancing frequency-usage efficiency of the UE and the base station, wherein the UE is simultaneously connected to two independent heterogeneous or homogeneous wireless communication cell groups having a separate radio resource control entity and uses a frequency resource on a component carrier of a cell in each of cell groups located in different frequency bands for signal transmission or reception. The dual connectivity includes a master cell group in which a control plane is directly connected to a core network to manage a radio resource control state of the UE and a secondary cell group linked to the master cell group.

Research on the dual connectivity technology and the carrier aggregation technology are actively being conducted due to technical advantages of increasing efficiency to use limited radio communication resources of the UE and limited radio communication resources of the base station. Particularly, a 5G mobile communication system uses a non-standalone scheme of interworking with a 4G core network as a basic operation scheme, which is used as a core technology in a commercial service supporting the 5G mobile communication system.

The wireless communication system 100 may be a wireless environment supporting a TDD system. The wireless communication environment may temporarily divide uplink transmission and downlink transmission, according to the TDD communication scheme. Hereafter, the resource structure for the TDD communication scheme is described. A TDD frame may include an uplink (UL) subframe for the UL transmission and a downlink (DL) subframe for the DL transmission. The frame may include a special subframe (SSF) for switching from the DL transmission to the UL transmission. Here, a UL/DL configuration may refer to a combination of UL subframes, DL subframes, and SSFs that may be included in one frame. A different UL/DL configuration may represent a different combination of UL subframes, DL subframes, and SSFs in one frame. For example, UL/DL configuration #2 may include six DL subframes, two UL subframes, and two SSFs, and UL/DL configuration #5 may include eight DL subframes, one UL subframe, and one SSF. In some embodiments, the UL/DL configuration may be operated as shown in Table 1 below. In the following Table 1, D may denote a DL subframe, S may denote an SSF, and U may denote a UL subframe.

**[Table 1]**

| **UL/DL Configuration** | **Subframe number** | | | | | | | | | | **Each subframe number** | | |
|---|---|---|---|---|---|---|---|---|---|---|---|---|---|
| | **0** | **1** | **2** | **3** | **4** | **5** | **6** | **7** | **8** | **9** | **DL** | **UL** | **S** |
| 0 | D | S | U | U | U | D | S | U | U | U | 2 | 6 | 2 |
| 1 | D | S | U | U | D | D | S | U | U | D | 4 | 4 | 2 |
| 2 | D | S | U | D | D | D | S | U | D | D | 6 | 2 | 2 |
| 3 | D | S | U | U | U | D | D | D | D | D | 6 | 3 | 1 |
| 4 | D | S | U | U | D | D | D | D | D | D | 7 | 2 | 1 |
| 5 | D | S | U | D | D | D | D | D | D | D | 8 | 1 | 1 |
| 6 | D | S | U | U | U | D | S | U | U | D | 3 | 5 | 2 |

In order to avoid interference between the UL subframes and the DL subframes between cells, adjacent cells may have the same UL/DL configuration. Hereinafter, a situation in which the described UL/DL configuration of the base station 110 is the same is assumed.

Since the same carrier frequency is used for the UL transmission and the DL transmission in the TDD system, switching between DL and UL may be required for the base station 110 and the UE 120. The TDD frame may include an SSF for the switching. The SSF may include a downlink pilot time slot (DwPTS), a guard period (GP), and an uplink pilot time slot (UpPTS). The DwPTS is a time period for DL resources in the SSF and may be used to transmit a physical downlink shared channel (PDSCH). The UpPTS is a time period configured for UL resources within the SSF, and may be used to transmit a sounding reference signal (SRS) and/or a physical random access channel (PRACH). The GP is a time period in which neither the DL transmission nor the UL transmission occurs, and may be a period required for the DL to UL switching. The GP may be a time period located between the DwPTS and the UpPTS within one SSF (e.g., 1 ms). Here, a combination of DwPTSs, GPS, and UpPTSs included in one SSF may be referred to as an SSF configuration. A different SSF configuration may represent a different combination of a DwPTS length, a GP length, and an UpPTS length in one frame. For example, UL/DL configuration #5 may represent a combination in which the DwPTS occupies three symbols, the GP occupies nine symbols, and the UpPTS occupies two symbols, and UL/DL configuration #7 may represent a combination in which the DwPTS occupies ten symbols, the GP occupies two symbols, and the UpPTS occupies two symbols. In some embodiments, if the wireless communication environment 100 supports the TDD communication system, the SSF configuration may be operated as shown in Table 2 below.

**[Table 2]**

| **SSF Configuration** | **Symbol Number** | | | | | | | | | | | | | |
|---|---|---|---|---|---|---|---|---|---|---|---|---|---|---|
| | **0** | **1** | **2** | **3** | **4** | **5** | **6** | **7** | **8** | **9** | **10** | **11** | **12** | **13** |
| 0 | Dw | | | GP | | | | | | | | | | Up |
| 1 | Dw | | | | | | | | | GP | | | | Up |
| 2 | Dw | | | | | | | | | | GP | | | Up |
| 3 | Dw | | | | | | | | | | | GP | | Up |
| 4 | Dw | | | | | | | | | | | | GP | Up |
| 5 | Dw | | | GP | | | | | | | | | Up | |
| 6 | Dw | | | | | | | | | GP | | | Up | |
| 7 | | Dw | | | | | | | | GP | | Up | | |
| 8 | | Dw | | | | | | | | | GP | Up | | |
| 9 | | Dw | | | | | | | GP | | | Up | | |

A DL signal transmitted from a neighboring cell may be introduced after the DwPTS period of other cell, due to propagation delay. Accordingly, the length of the GP may need to be allocated to avoid the UL transmission and the DL transmission from interfering with each other in the base station 110. Specifically, as the length of the GP increases, as the length of the DwPTS decreases, or as the length of the UpPTS decreases, the period in which neither the DL transmission nor the UL transmission is transmitted increases, thus avoiding the interference may become easier.

A communication node (e.g., a UE, a base station, or an entity of a core network) according to various embodiments of the disclosure may operate in an NR system, the disclosure is not limited thereto, and the communication node may operate together in an LTE system, a system to be introduced later, etc.

In addition, in some embodiments, the base station and the UE may use the TDD communication system of the NR. The TDD communication system of the NR may be configured more flexibly than the LTE TDD communication system. The TDD communication system of the NR may define a DL-UL pattern indicating a relationship between DL time resources for the DL communication and UL time resources for the UL communication. The DL-UL pattern may include a configuration periodicity, a DL time period, and a UL time period. The configuration periodicity may indicate a time for which one DL-UL pattern is applied. For example, the configuration periodicity may be at least one of 0.5 ms, 0.625 ms, 1 ms, 1.25 ms, 2.5 ms, 3 ms, 4 ms, 5 ms, and 10 ms. The DL time period may refer to a time resource for which the DL communication continues. The DL time period may be represented by the number of slots, the number of slots and symbols, or only the number of symbols. The DL time period may be located in a beginning part within one configuration period. The UL time period may refer to a time resource for which the UL continues. The UL time period may be represented by the number of slots, the number of slots and symbols, or only the number of symbols. The UL time period may be located in an end part within one configuration period. Slots other than a DL slot (a slot in which all symbols are DL symbols) and a UL slot (a slot in which all symbols are UL symbols) within one configuration period may be referred to as a flexible slot.

As an example of a resource structure of NR TDD, if a subcarrier spacing (SCS) is 15 kHz, five slots may be defined for the configuration period of 5 ms. Among the five slots, the first two slots may be DL slots, the last two slots may be UL slots, and UL symbols and DL symbols may coexist in the middle slot. First five symbols of the 14 symbols of the remaining slot may be DL symbols, the last three symbols of the 14 symbols may be UL symbols, and the remaining six symbols of the 14 symbols may be flexible symbols.

The TDD communication system uses the same carrier frequency for uplink transmission and downlink transmission, and may thus need to distinguish between a DL time period and a UL time period. Accordingly, as described above, the resource structures for the TDD communication system may include the DL time period, the UL time period, and a remaining period between the DL time period and the UL time period. Due to the time period distinguishment, propagation delay may cause inter-cell interference. For example, in the LTE communication system, the base station 110 may transmit or receive signals according to frames. The base station 110 may transmit or receive signals according to frames.

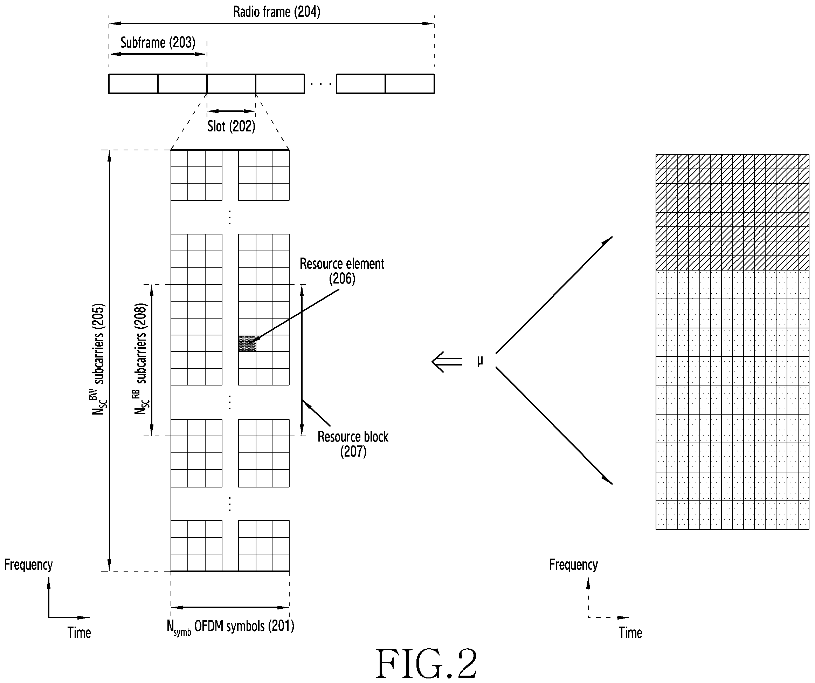

FIG. 2 illustrates an example of a radio resource domain in a wireless communication system according to embodiments of the disclosure. In various embodiments of the disclosure, the radio resource domain may include a structure of a time-frequency domain. According to an embodiment, the wireless communication system may include an NR communication system.

Referring to FIG. 2, in the radio resource domain, a horizontal axis indicates the time domain and a vertical axis indicates the frequency domain. The length of a radio frame 204 may be 10 ms. The radio frame 204 may be a time domain period including 10 subframes. The length of a subframe 203 may be 1 ms. A configuration unit in the time domain may be an orthogonal frequency division multiplexing (OFDM) symbol and/or a discrete Fourier transform (DFT)-spread-OFDM (DFT-s-OFDM) symbol, and Nsymb OFDM and/or DFT-s-OFDM symbols 201 may constitute one slot 202. In various embodiments, the OFDM symbol may include a symbol for transmitting and receiving a signal by using the OFDM multiplexing scheme, and the DFT-s-OFDM symbol may include a symbol for transmitting and receiving a signal by using the DFT-s-OFDM or single carrier frequency division multiple access (SC-FDMA) multiplexing scheme. A minimum transmission unit in the frequency domain may be a subcarrier, and a carrier bandwidth forming a resource grid may include a total N_{SC}BW of subcarriers 205. In addition, the disclosure describes an embodiment related to DL signal transmission and reception for convenience of description, but is also applicable to an embodiment relating to UL signal transmission and reception.

In some embodiments, the number of the slots 202 constituting one subframe 203 and the length of the slot 202 may vary depending on the SCS. The SCS may be referred to as numerology µ. That is, the SCS, the number of the slots included in the subframe, the slot length, and the subframe length may be variably configured. For example, if the SCS is 15 kHz in the NR communication system, one slot 202 may form one subframe 203, and each of the length of the slot 202 and the subframe 203 may be 1 ms. In addition, for example, if the SCS is 30 kHz, two slots may form one subframe 203. In this case, the length of the slot may be 0.5 ms and the length of the subframe may be 1 ms.

In some embodiments, the SCS, the number of the slots included in the subframe, the slot length, and the subframe length may be variably applied depending on the communication system. For example, in a case of an LTE system, the SCS may be 15 kHz, and two slots may form one subframe, wherein the slot length may be 0.5 ms and the subframe length may be 1 ms. As another example, in a case of an NR system, the SCS µ may be one of 15 kHz, 30 kHz, 60 kHz, 120 kHz, and 240 kHz, and the number of the slots included in one subframe may be 1, 2, 4, 8, or 16, according to the SCS µ.

A basic unit of the resource in the time-frequency domain is a resource element (RE) 206, and the RE element 206 may be expressed by an OFDM symbol index and a subcarrier index. A resource block may include a plurality of REs. In the NR system, a resource block (RB) (or a physical resource block (PRB)) 207 may be defined as NSCRB consecutive subcarriers in the frequency domain. The number NSCRB subcarriers may be 12. The frequency domain may include common resource blocks (CRBs). A physical resource block (PRB) may be defined in a bandwidth part (BWP) on the frequency domain. CRB and PRB numbers may be determined differently according to the SCS. In the LTE system, the RB may be defined as Nsymb consecutive OFDM symbols in the time domain and NSC RB consecutive subcarriers in the frequency domain.

In the NR and/or LTE system, scheduling information of DL data or UL data may be transmitted from the base station 110 to the UE 120 through downlink control information (DCI). In various embodiments, the DCI may be defined according to various formats, and each format may indicate whether the DCI includes scheduling information (e.g., an UL grant) for UL data, whether the DCI includes scheduling information (e.g., DL resource allocation) for DL data, whether the DCI is compact DCI having control information of small size or fallback DCI, whether spatial multiplexing using multiple antennas is applied, and/or whether the DCI is DCI for power control. For example, NR DCI format 1_0 or NR DCI format 1_1 may include scheduling for DL data. In addition, for example, NR DCI format 0_0 or NR DCI form 0_1 may include scheduling for UL data.

As described above, FIG. 2 illustrates an example of a DL and a UL slot structure in the wireless communication system. In particular, FIG. 2 illustrates a resource grid structure of a 3GPP NR system. Referring to FIG. 2, the slot may include a plurality of orthogonal frequency division multiplexing (OFDM) symbols in the time domain, and a plurality of resource blocks (RBs) in the frequency domain. The signal may include a part or all of the resource grid. In addition, in general, the number of OFDM symbols included in one slot may vary according to the length of a cyclic prefix (CP). Although FIG. 2 illustrates that one slot includes 14 OFDM symbols for convenience of description, the signal referred to by the disclosure does not limit the configuration of the symbol. Furthermore, a modulation scheme of a generated signal is not be limited to quadrature amplitude modulation (QAM) with a specific value, and may conform to modulation schemes of various communication standards such as binary phase-shift keying (BPSK) and quadrature phase shift keying (QPSK).

Various embodiments of the disclosure are described based on the LTE communication system or the NR communication system, but the contents of the disclosure are not limited thereto and may be applied to various wireless communication systems for transmitting DL or UL control information. In addition, the contents of the disclosure may be applied to an unlicensed band as needed, in addition to a licensed band.

Hereinafter, higher-layer signaling or a higher signal in the disclosure may refer to a signal transmission method in which a signal is transmitted from the base station 110 to the UE 120 by using a DL data channel of a physical layer, or from the UE 120 to the base station 110 by using a UL data channel of the physical layer. According to an embodiment, the higher-layer signaling may include at least one of radio resource control (RRC) signaling, signaling according to an F1 interface between a centralized unit (CU) and a distributed unit (DU), or a signal transmission method transmitted through a media access control (MAC) control element (MAC CE). In addition, according to an embodiment, the higher-layer signaling or the higher signal may include system information that may be commonly transmitted to a plurality of UEs 120, for example, a system information block (SIB).

In a 5G wireless communication system, a synchronization signal block (SSB) (or referred to as an SS block, an SS/PBCH block, etc.) may be transmitted for initial access, and the SSB may include a primary synchronization signal (PSS), a secondary synchronization, signal (SSS), and a physical broadcast channel (PBCH). In the initial access stage in which the UE accesses the system for the first time, the UE may obtain DL time and frequency domain synchronization from a synchronization signal through cell search and obtain a cell ID. The synchronization signal may include a PSS and an SSS. The UE may receive a PBCH including a master information block (MIB) from the base station to obtain system information related to transmission and reception, such as a system bandwidth, and basic parameter values. The UE may a system information block (SIB) by decoding, based on the received PBCH, a physical downlink control channel (PDCCH) and a physical downlink shared channel (PDSCH). Thereafter, the UE may exchange identity with the base station through a random access stage, and may initially access the network through operations such as registration and authentication.

As described above, one slot may include 14 symbols, and in the 5G communication system, the uplink-downlink configuration of the symbol and/or slot may include three stages.

As a first method, semi-statically, the uplink-downlink configuration of a symbol/slot may be configured through cell-specific configuration information through system information in a symbol unit. More specifically, the cell-specific uplink-downlink configuration information through the system information may include uplink-downlink pattern information and reference subcarrier information. The uplink-downlink pattern information may include the periodicity, the number of consecutive downlink slots from the start point of each pattern, the number of symbols of the next slot, the number of consecutive uplink slots from the end of the pattern, and the number of symbols of the next slot. The slots and symbols not indicated for uplink and downlink may be determined to be flexible slots/symbols.

As a second method, through user-specific configuration information through dedicated higher-layer signaling, a flexible slot or a slot including flexible symbols may be indicated by the number of consecutive downlink symbols from the start symbol of the slot and the number of consecutive uplink symbols from the end of the slot, or may be indicated by the entire downlink of the slot or the entire uplink of the slot.

As a third method, in order to dynamically change the downlink signal transmission and the uplink signal transmission period, whether each of the symbols (i.e., symbols not indicated by the downlink and the uplink) indicated by the flexible symbol in each slot is a downlink symbol, an uplink symbol, or a flexible symbol may be indicated through a slot format indicator (SFI) included in the downlink control channel. The slot format indicator may select one index from a table (e.g., 3GPP TS 38.213 Table 11.1.1-1) in which the uplink-downlink configuration of 14 symbols in one slot is pre-configured.

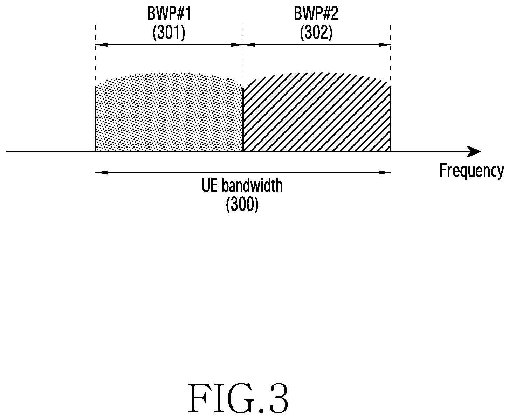

FIG. 3 illustrates an example of a bandwidth part configuration in a wireless communication system according to an embodiment of the disclosure. To be specific, referring to FIG. 3, a detailed description is given of a bandwidth part (BWP configuration related to a bandwidth which is allocated to a UE by a base station in a wireless communication system according to embodiments of the disclosure.

More specifically, FIG. 3 illustrates an example in which a UE bandwidth 300 is configured to include two bandwidth parts, that is, bandwidth part #1 (BWP#1) 301 and bandwidth part #2 (BWP#2) 302.

A base station may configure one or multiple bandwidth parts for a UE. The base station may configure the following pieces of information with regard to each bandwidth part as given below.

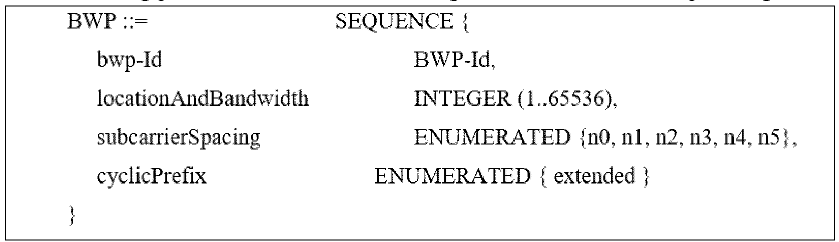

Referring to the above-described information, "locationAndBandwidth" indicates the location and bandwidth of a corresponding bandwidth part in the frequency domain. "subcarrierSpacing" indicates a subcarrier spacing to be used in a corresponding bandwidth part. "cyclicPrefix" indicates whether a cyclic prefix (CP) is used for a corresponding bandwidth part.

According to an embodiment of the disclosure, the bandwidth part configuration is not limited by the above-described information, and in addition to the above configuration information, various parameters related to the bandwidth part may be configured for the UE. The base station may transfer the configuration information to the UE through upper layer signaling (for example, radio resource control (RRC) signaling). One configured bandwidth part or at least one bandwidth part among multiple configured bandwidth parts may be activated. The base station may transfer whether or not to activate a configured bandwidth part to the UE semi-statically through RRC signaling. The base station may transfer whether or not to activate a configured bandwidth part to the UE dynamically through downlink control information (DCI).

According to an embodiment, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. The UE may receive configuration information with regard to a search space through the MIB. Each of the control resource set and the search space configured through the MIB may be considered identity (ID) 0. The base station may notify the UE of configuration information, such as frequency allocation information, time allocation information, and numerology, regarding control region #0 through the MIB. In addition, the base station may notify the UE of configuration information regarding the monitoring cycle and occasion with regard to control resource set #0 (for example, configuration information regarding search space #0) through the MIB. The UE may consider that a frequency domain configured by control resource set #0 acquired from the MIB is an initial bandwidth part for initial access. The ID of the initial bandwidth part may be considered to be 0.

According to various embodiments of the disclosure, the bandwidth part-related configuration supported by 5G may be used for various purposes.

According to an embodiment, if the bandwidth supported by the UE is smaller than the system bandwidth, this may be supported through the bandwidth part configuration. For example, the base station may configure the frequency location of the bandwidth part for the UE, and the UE can transmit or receive data at a specific frequency location within the system bandwidth.

In addition, according to an embodiment, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to an embodiment, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through an MIB in the initial access step. More specifically, a control resource set (CORESET) may be configured for the UE. The control resource set configured for the UE may be a control resource set for a downlink control channel which may be used to transmit DCI for scheduling a system information block (SIB) from the master information block (MIB) of a physical broadcast channel (PBCH). The bandwidth of the control resource set configured through the MIB may be regarded as an initial bandwidth part. The UE may receive, through the configured initial bandwidth part, a PDSCH through which an SIB is transmitted. The initial bandwidth part may be used not only for the purpose of receiving the SIB, but also for other system information (OSI), paging, random access, or the like.

An example of changing a BWP will be described in detail with reference to FIG. 3. If a UE has one or more bandwidth parts configured therefor, the base station may indicate, to the UE, to change (or switch or transition) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI. The UE may change the bandwidth part to bandwidth part #2 302 indicated by the bandwidth part indicator inside received DCI.

As described above, DCI-based bandwidth part changing may be indicated by DCI for scheduling a PDSCH or a PUSCH. Upon receiving a bandwidth part change request, the UE needs to be able to receive or transmit the PDSCH or PUSCH scheduled by the corresponding DCI in the changed bandwidth part with no problem. To this end, requirements relating to delay time (T_{BWP}) required at the time of bandwidth part changing are defined in the standards. The requirements relating to delay time may be defined as in Table 3 below without being limited thereto.

**[Table 3]**

| ***µ*** | **NR Slot Length (ms)** | **BWP switch delay T_{BWP} (slots)** | |
|---|---|---|---|
| | | **Type 1^{Note 1}** | **Type 2^{Note 1}** |
| **0** | **1** | **1** | **3** |
| **1** | **0.5** | **2** | **5** |
| **2** | **0.25** | **3** | **9** |
| **3** | **0.125** | **6** | **18** |
| **Note 1:** Depends on UE capability. | | | |
| **Note 2:** If the BWP switch involves changing of SCS, the BWP switch delay is determined by the larger one between the SCS before BWP switch and the SCS after BWP switch. | | | |

The requirements for the bandwidth part change delay time may support type 1 or type 2, depending on the capability of the UE. The UE may report the supportable bandwidth part change delay time type to the base station.

If the UE has received DCI including a bandwidth part change indicator in slot n, according to the above-described requirements regarding the bandwidth part change delay time, the UE may complete a change to the new bandwidth part indicated by the bandwidth part change indicator at a timepoint not later than slot n+T_{BWP}. The UE may transmit/receive a data channel scheduled by the corresponding DCI in the changed new bandwidth part. If the base station wants to schedule a data channel by using the new bandwidth part, the base station may determine time domain resource allocation regarding the data channel in consideration of the UE's bandwidth part change delay time (T_{BWP}). When scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI that indicates a bandwidth part change will indicate a slot offset (K0 or K2) value smaller than the bandwidth part change delay time (T_{BWP}).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

An additional coverage extension technology is introduced to a 5G mobile communication service compared to an LTE communication service, and the coverage of the actual 5G mobile communication service may utilize a TDD system appropriate for a service having a higher ratio of downlink traffic in general. In addition, as the center frequency increases to increase the frequency band, a path loss according to the distance between the base station and the UE is increased, and thus the coverage enhancement of the 5G mobile communication system is required. Specifically, a traffic ratio of downlink is relatively higher than uplink, and in order to support a service of such a traffic pattern, a ratio of downlink may be greater than uplink in the time domain. In this case, transmission power of the UE is lower than that of the base station, and thus the coverage enhancement of the uplink channel is a core requirement for the 5G mobile communication service.

As a method for physically enhancing the coverage of the uplink channel of the base station and the UE, there may be a method for increasing transmission power of the UE, increasing a time resource of the uplink, or changing the center frequency. However, the changing of the center frequency may have constraint because an operable frequency may be already determined for each network operator and/or a business operator. In addition, in consideration of interference, etc., maximum transmission power of the UE is defined by standards, and thus there may be constraints on increasing the maximum transmission power of the UE.

In the recent Release 18 system, for coverage enhancement of the base station and the UE, under a time division duplex (TDD) system, instead of dividing resources according to a traffic ratio of uplink and downlink only in the time domain, a method for dividing uplink and downlink resources also in the frequency domain as in a frequency division duplex (FDD) system is considered. In an embodiment, a system in which uplink and downlink resources are flexibly divided in the time domain and the frequency band may be referred as a cross division duplex (XDD) system. The XDD system may be referred to as a flexible TDD system, a hybrid TDD system, a TDD-FDD system, a hybrid TDD-FDD system, or other similar terms. According to various embodiments of the disclosure, for convenience of description, the system is described as an XDD system. According to an embodiment, XDD-UL in XDD may mean configuring, as uplink, a part of the frequency domain of a slot or a symbol configured as downlink.

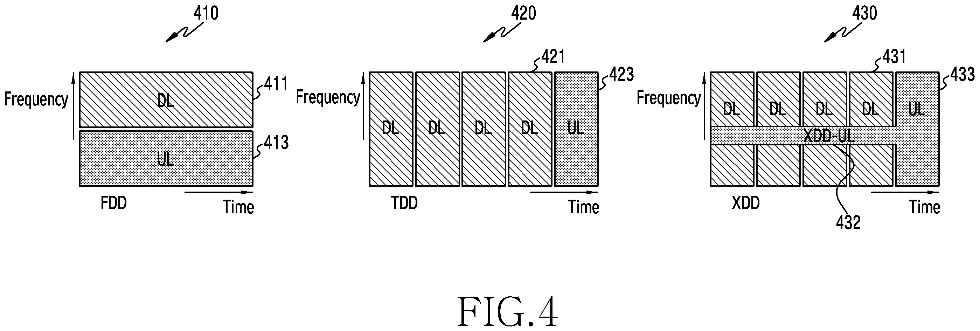

FIG. 4 illustrates various examples of a frequency division duplex (FDD) scheme, a time division duplex (TDD) scheme, and a cross division duplex (XDD) scheme in a wireless communication system according to various embodiments of the disclosure. Specifically, referring to FIG. 4, an uplink and downlink configuration of an FDD system 410, a TDD system 420, and an XDD system 430 in which uplink and downlink resources are flexibly divided in the time and frequency domain. As illustrated in FIG. 4, conventionally, in the wireless communication system, uplink and downlink have been divided by frequency and time in the FDD 410 and the TDD 420 and used.

The FDD system 410 may include dividing an uplink 413 and a downlink 411 by frequency and simultaneously performing bidirectional communication. Specifically, a given frequency band is divided, one part is used for the downlink 411 and the other part is used for the uplink 413. The FDD system 410 has less possibility that the interference occurs and can secure continuous and always-on bidirectional communication time because the frequency can be shared. However, since the frequency band is shared a bandwidth of each communication is reduced and the amount of data that can be transmitted at a time may be small, which may cause waste of resources when the data traffic amounts of the uplink and the downlink are asymmetric.

In the TDD system 420, an uplink 423 and a downlink 421 may be divided by time and uplink and downlink communications may be alternately performed. Specifically, a give frequency band can be fully used, but continuous communication cannot be secured because the uplink 423, the downlink 421, and a guard period (not shown in FIG. 4) therebetween. In the TDD system 420, more resources can be allocated to a downlink having a relatively large amount of data traffic (the opposite case or symmetrical allocation is also possible), and the efficiency of the frequency resource thus can be increased, but there is a disadvantage in transmission latency and coverage because time resources for uplink transmission are limited.

In order to overcome the above-described disadvantages of the FDD system 410 and the TDD system 420, a cross division duplex (XDD) system 430 that combines the FDD and TDD schemes can be considered. The XDD system 430 allocates a partial area of a downlink transmission period 431 to an uplink period 432 to improve transmission latency and coverage of the TDD system 420. For example, in the conventional TDD system, data transmission is possible only in a configured uplink slot or symbol, whereas in the XDD system, latency can be reduced because transmission is possible in a configured XDD-UL period. In addition, according to various embodiments of the disclosure, the disclosure is not limited to the XDD-UL illustrated in FIG. 4, and a method for allocating a partial area of the uplink transmission period to the downlink period (e.g., XDD-DL) is also possible.

Referring to FIG. 4, from the perspective of the base station, the uplink and downlink configuration 430 of the entire XDD system enables resources to be flexibly allocated to each symbol or slot according to a traffic ratio between the uplink and the downlink. Although not shown in FIG. 4, in this case, a guard band may be allocated between a frequency band between the downlink resource 431 and the uplink resource 433. The guard band may be allocated as a method for reducing interference in uplink channel or signal reception by out-of-band emission caused when the base station transmits a downlink channel or signal in the downlink resource. According to an embodiment, referring to FIG. 4, a UE having more downlink traffic than uplink traffic overall by a configuration of the base station may receive an allocation of a resource ratio between the downlink and the uplink as 4:1 in the time domain. Upon various implementations of the TDD and XDD systems, a UE which operates at a cell boundary and thus has insufficient uplink coverage may only receive an allocation of an uplink resource in a specific time period by the configuration of the base station. Additionally, a UE which operates at a cell boundary and thus has insufficient uplink coverage, but has a relatively large amount of downlink and uplink traffic amount may be allocated with more uplink resources in the time domain and more downlink resources in the frequency domain for the uplink coverage. As in the above-descried examples, various implementations are possible such that UEs operating in the cell center and having a relatively large amount of downlink traffic may be allocated with more downlink resources in the time domain, and UEs operating at the cell boundary and relatively having insufficient uplink coverage may be allocated with more uplink resources in the time domain.

As described above, the disclosure provides a technology of signal transmission and reception of the base station and the UE in an XDD system in which uplink and downlink resources are flexibly allocated in the time and frequency domain according to a traffic ratio between the uplink and the downlink in a 5G or 6G wireless communication system. Hereinafter, the disclosure is also applicable to a signal transmission and reception technology for a service (e.g., URLLC, etc.) which can be provided in the various purposes of 5G or 6G systems. In addition, the disclosure is not limited to the XDD system, and is also applicable to a signal transmission and reception technology in other division duplex systems or full-duplex band communication which can be provided in the 5G or 6G system.

According to various embodiments of the disclosure, in the XDD system, as described above, the uplink and downlink resources are divided not only by time as in the TDD system but also by frequency resources. There may be an indicator which can inform the UE of the configuration information. Specifically, in a case where UEs supporting TDD and UEs supporting XDD co-exist and there is no indicator, when the TDD UE and the XDD UE simultaneously receive uplink transmission configuration and downlink reception configuration in the same symbol, the operations of the UEs are identical. Accordingly, the base station may configure an XDD-UL indicator for the UE so that the XDD UE having received the configuration may perform a different operation from the TDD UE.

In the case of current 3GPP Release 18, in relation to the XDD system, the research is focused on evaluating feasibility and performance of defining an XDD-UL period, based on developing a distribution scenario and use case of the XDD operating environment. Accordingly, the perspective of the current research is focused in the discussion about a fixed bandwidth (BW), but in a scenario of frequency sharing with another system later (e.g., a case where a system BW changes), the XDD-UL period cannot be used according to the position of the initially configured XDD-UL period, and accordingly, effects of transmission latency prevention and coverage gain acquired through the XDD system may be reduced.

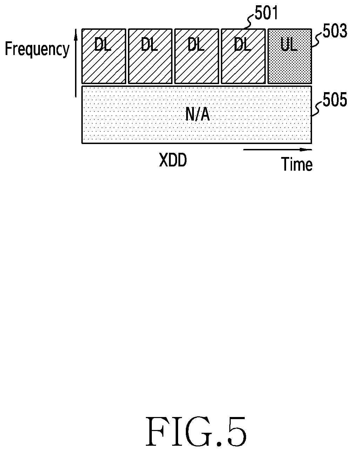

FIG. 5 illustrates an example of including a frequency band unavailable in a wireless communication system according to embodiments of the disclosure. Specifically, referring to FIG. 5, an example in which a part 505 of a bandwidth (BW) in use becomes unavailable due to a reason of sharing frequency with another system is illustrated.

According to an embodiment, an XDD system may configure an XDD-UL which can be operated as XDD for each base station cell or UE and use the same in an environment in which a system BW is fixed. However, there may be a scenario of sharing frequency with another system or operator in an actual network operating environment. For example, there may be a shared radio frequency band (e.g., citizens broadband radio service (CBRS)) which can be used to build a personal network and expand a shared communication band. In a case of the shared band system or a case of sharing frequency with an operator or the like, a currently available system BW may be changed. When the system BW is changed, there may be a case where an XDD-UL period cannot be used according to the position of the XDD-UL period initially configured by the base station. For example, referring to FIG. 5, with reference to the frequency axis, when an initially configured XDD-UL period is configured in an area 505, the area 505 may become unavailable as the frequency is shared with another system, an operator, or the like. In this case, the initially configured XDD-UL period in the area 505 may also become unavailable. Referring to FIG. 5, the system BW is reduced, the initially configured XDD-UL period may disappear, and accordingly, gains of coverage enhancement and latency reduction acquired by using the XDD system may also disappear. Accordingly, the base station and the UE may need to adaptively change the configuration of the XDD-UL period for efficient operation of the XDD-UL period.

In addition, in addition to the case where the system BW is changed, there may be a case where a bandwidth part (BWP) configured for the UE is changed and the XDD-UL period initially configured by the base station becomes unavailable. According to an embodiment, when active BWP#1 is deactivated, the XDD-UL period configured in the deactivated BWP#1 area may also become unavailable. Accordingly, the base station and the UE may need to adaptively change the configuration of the XDD-UL period for efficient operation of the XDD-UL period.

Accordingly, as described above, the disclosure provides a method and a device for channel and signal transmission and reception of the base station and the UE to adaptively change the XDD-UL period in an XDD system in which uplink and downlink resources are flexibly allocated in the time and frequency domains. Specifically, a method in which configuration information of an XDD-UL resource of a slot and/or a symbol is indicated to the UE via signaling and the UE changes the position of the XDD-UL resource is described.

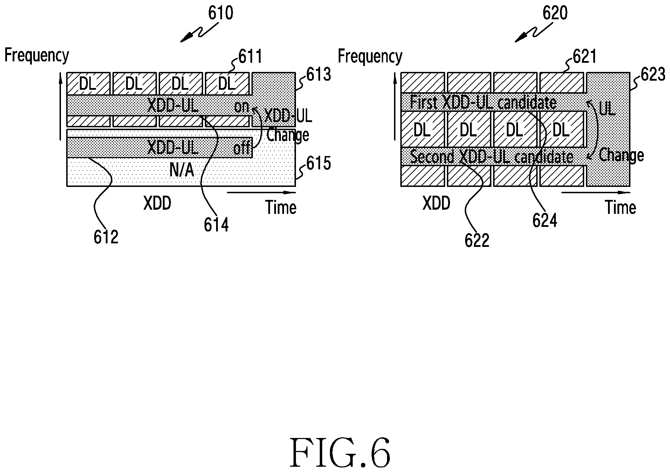

FIG. 6 illustrates various examples of changing an XDD period according to various embodiments of the disclosure. Specifically, referring to FIG. 6, examples of changing an initially configured XDD-UL period to another bandwidth period are illustrated.

According to various embodiments of the disclosure, as described above, the position of an XDD-UL resource configured from the base station may be indicated to an XDD UE. In this case, due to the above-described reason such as a case where the frequency band is unavailable, the position of the resource configured as XDD-UL may not be utilized. Accordingly, to utilize the XDD-UL period, the base station may change or change in advance XDD-UL configuration information. In addition, for coverage extension, the XDD UE may need another operation of increasing an uplink time domain resource in the XDD-UL configuration of the base station. Accordingly, according to various embodiments of the disclosure, a method for subsequently changing and indicating resource information configured as XDD-UL in the XDD system is described.

According to various embodiments of the disclosure, a method for changing resource configuration configured as XDD-UL in the XDD system may include configuring, by the base station, an indicator for XDD or resource information for XDD for the UE. The base station may configure the indictor for XDD via at least one of system information including cell-specific configuration information, UE-dedicated higher layer signaling, medium access control-control element (MAC-CE), or downlink control information (DCI). However, according to various embodiments of the disclosure, the disclosure is not limited thereto, and the base station may configure the indicator for XDD for the UE via various types of signaling.

According to an embodiment, the base station may configure resource information of XDD for the UE via higher-layer (e.g., radio resource control (RRC)) signaling. The resource information for XDD configured by the base station may include resource information relating to at least one of a start symbol and an end symbol of the changed XDD-UL resource, a start symbol of the changed XDD-UL resource and the number of consecutive symbols used as XDD-UL from the start symbol, or an application time point of the changed XDD-UL resource.

According to an embodiment, based on various reasons including a case where an initially configured XDD-UL period 612 is identified as unavailable, a case where a channel quality deteriorates in the configured XDD-UL period 612, etc., whether an XDD-UL period change is necessary may be identified. According to an embodiment, based on the above-described reason, etc., the base station may identify whether the XDD-UL period change is necessary. According to an embodiment, when a pre-configured criterion related to the above-described various reasons is satisfied, the UE may request a change to a new XDD-UL period 614 from the base station. The base station may configure information on the new XDD-UL period 614 for the UE. The base station may configure, based on the above-described resource information of the XDD-UL or the XDD-UL indicator, the changed XDD-UL period 614 for the UE. Although not shown in FIG. 6, the UE may identify that the allocated XDD-UL period 612 is an unavailable frequency area 615 simultaneously, or before the changed XDD-UL period 614 is configured from the base station. The UE may identify that the allocated XDD-UL period 612 is included in the unavailable frequency area 615, and may request a configuration of the new XDD-UL period 614 from the base station. A message for requesting the configuration for the new XDD-UL period from the base station by the UE may include information on the unavailable frequency band 615, an available frequency band, etc.

According to an embodiment, the base station may indicate, based on information on a BWP, an XDD-UL period change. The base station may configure, based on bandwidth part (BWP) information, the information on XDD for the UE. An operation of configuring or changing, based on the BWP information, a bandwidth is described in FIG. 3 in detail. Specifically, the base station may transmit BWP configuration information for configuring at least one bandwidth part (BWP) to the UE. The BWP configuration information may include mapping information of at least one BWP mapped to each XDD-UL period. The base station may configure, based on first BWP information, information on the entire bandwidth available to the UE to the UE.

In addition, the base station may configure, based on second BWP information, a period 612 for a band used as XDD-UL. When an unavailable band 615 is identified among frequency bands used by the UE and a change of the XDD-UL period is necessary (e.g., when the UE requests a change of the XDD-UL period), the base station may identify, using third BWP information, the changed period 614 for the band used as XDD-UL. When the change of the XDD-UL period is necessary, the base station may indicate the change of the XDD-UL period by transmitting at least one of the identified third BWP information or BWP indicator information to the UE.

As described in FIG. 3 in detail, according to an embodiment, the base station may configure, for the UE, an initial bandwidth part allocated to the UE or a bandwidth part used as XDD-UL, as an MIB in an initial access stage. According to an embodiment, the base station may indicate, based on DCI scheduling a PDSCH or a PUSCH, a changed XDD-UL period. However, the above-described information is a mere example, and is not limited thereto, and the base station may transmit, to the UE, information on a bandwidth or a bandwidth change indicator by using various types of signaling or parameters.

According to various embodiments of the disclosure, a method for changing resource information configured as XDD-UL in an XDD system may include configuring, by the base station, information on one or more XDD-UL periods for the UE in advance. In FIG. 6, it is illustrated that XDD-UL candidate periods are two, but the disclosure is not limited thereto, and the base station may configure information on multiple XDD-UL candidate periods (e.g., XDD-UL resource information) for the UE. The base station may configure the indicator for XDD via at least one of system information including cell-specific configuration information, UE-dedicated higher-layer signaling, a medium access control-control element (MAC-CE), or downlink control information (DCI). However, according to various embodiments of the disclosure, the disclosure is not limited thereto, and the base station may configure the indicator for XDD for the UE via various types of signaling.

According to an embodiment, the base station may configure resource information for XDD for the UE via higher-layer (e.g., radio resource control (RRC)) signaling. The resource information for XDD configured by the base station may include resource information relating to at least one of a start symbol and an end symbol of the changed XDD-UL resource, a start symbol of the changed XDD-UL resource and the number of consecutive symbols used as XDD-UL from the start symbol, or an application time point of the changed XDD-UL resource.

According to an embodiment, the base station may configure, for the UE, resource information for at least one XDD-UL period or an indicator for at least one XDD-UL period. The UE may identify, based on various reasons including a case where an initially configured XDD-UL period 622 is identified as unavailable, a case where a channel quality deteriorates in the configured XDD-UL period 622, etc., whether an XDD-UL period change is necessary may be identified. When a pre-configured criterion related to the above-described various reasons is satisfied, the UE may request a change to a new XDD-UL period 614 from the base station. In this case, the information on the resource of the new XDD-UL period may be pre-configured for the UE, and thus the base station may transmit an XDD-UL indicator indicating one of one or more XDD-UL candidate periods to the UE. Although not shown in FIG. 6, the UE may identify that the allocated XDD-UL period 622 is an unavailable frequency area 625. The UE may identify that the allocated XDD-UL period 622 is included in the available frequency area 625, and request a change to a new XDD-UL period 624 from the base station. A message for requesting the configuration for the new XDD-UL period from the base station by the UE may include information on the unavailable frequency band 625, an available frequency band, etc.

According to an embodiment, the base station may indicate, based on information on a BWP, at least one XDD-UL period among XDD-UL candidate periods. The base station may configure, based on bandwidth part (BWP) information, information on XDD for the UE. An operation of configuring or changing, based on the BWP information, a bandwidth is described in FIG. 3 in detail. Specifically, the base station may transmit BWP configuration information for configuring at least one bandwidth part to the UE. The BWP configuration information may include mapping information of at least one BWP mapped to each XDD-UL period. The base station may configure, based on first BWP information, information on the entire bandwidth available to the UE to the UE. In addition, the base station may configure, based on different pieces of BWP information, the XDD-UL candidate periods 622 and 624, respectively. When a change of the XDD-UL period is necessary (e.g., when the UE requests a change of the XDD-UL period), the base station may identify the changed period 614 for a band used as XDD-UL among XDD-UL candidate periods. When the change of the XDD-UL period is necessary, the base station may indicate the change of the XDD-UL period by transmitting indicator information indicating a period for the identified XDD-UL band to the UE. As described in FIG. 3 in detail, according to an embodiment, the base station may configure, for the UE, an initial bandwidth part allocated to the UE or a bandwidth part used as XDD-UL, as an MIB in an initial access stage. According to an embodiment, the base station may indicate, based on DCI scheduling a PDSCH or a PUSCH, a changed XDD-UL period. However, the above-described information is a mere example, and is not limited thereto, and the base station may transmit, to the UE, information on a bandwidth or a bandwidth change indicator by using various types of signaling or parameters.

Additionally, according to an embodiment, an active BWP configured for the UE may be changed by the change of the XDD-UL period. For example, when the allocated XDD-UL period 622 is changed to a new XDD-UL period 624 due to a predetermined reason, the active BWP may be also changed to a period corresponding to the new XDD-UL period 624. The change of the active BWP may include deactivation of an active BWP and activation of the deactivated BWP.

According to various embodiments of the disclosure, the change of the XDD-UL period described in the disclosure may all include addition of an XDD-UL period, a change in the size of the XDD-UL period, or replacement of the configured XDD-UL period with another period. For example, the above-described operation is not limited to the change of the XDD-UL period itself, and may be performed for addition of the XDD-UL period or the change in the size of the XDD-UL period. According to an embodiment, the base station may identify whether to add the XDD-UL period or change the size thereof. According to an embodiment, by performing an operation substantially similar to the above-described contents, the base station may indicate the addition of XDD-UL or the change in the size of XDD-UL to the UE. According to an embodiment, the base station may identify to maintain the XDD-UL period and may indicate to maintain the XDD-UL period to the UE, based on additional criterion, in addition to the above-described criteria.

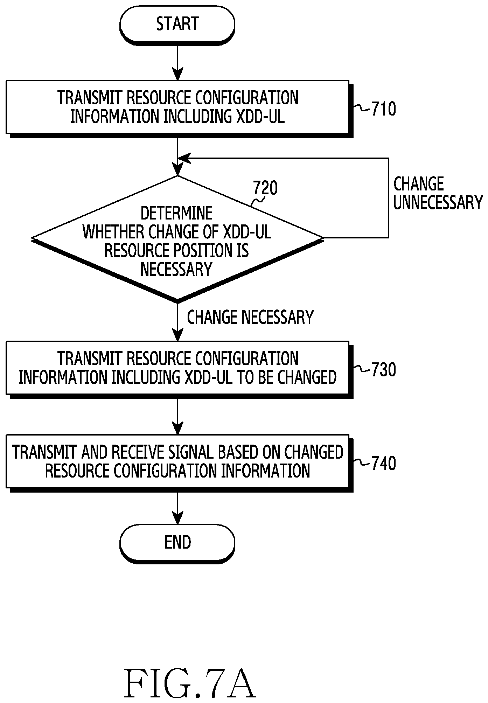

According to various embodiments of the disclosure, the change of the XDD-UL or the change of the BWP described in FIG. 6 may be applied to FIGS. 7A to 8B while having the same function.

FIG. 7A is a flow chart illustrating an operation of a base station for signal transmission and reception based on a changed XDD period according to various embodiments of the disclosure. According to various embodiments of the disclosure, FIG. 7A illustrates an example of an operation in which XDD-UL is configured in a time domain to which DL is allocated in a TDD system, but is not limited thereto, and an operation in which XDD-DL is configured in a time domain to which UL is allocated may be also performed.

In operation 710, the base station may transmit resource configuration information including information on an XDD-UL period to the UE. According to an embodiment, the base station may configure resource information for XDD for the UE via higher-layer (e.g., radio resource control (RRC)) signaling. The resource information for XDD, configured by the base station, may include resource information relating to at least one of a start symbol and an end symbol of an XDD-UL resource, a start symbol of the XDD-UL resource and the number of consecutive symbols used as XDD-UL from the start symbol, or an application time point of the XDD-UL resource. According to an embodiment, the resource configuration information configured for the UE by the base station may include information on multiple XDD-UL candidate periods.

According to an embodiment, the base station may configure, based on BWP information, information on XDD for the UE. Specifically, the base station may transmit BWP configuration information for configuring at least one BWP to the UE. The BWP configuration information may include mapping information of at least one BWP mapped to each XDD-UL period. The base station may configure, based on first BWP information, information on the entire bandwidth available to the UE for the UE, and may configure, based on different pieces of BWP information, information on multiple XDD-UL candidate periods to be allocated to the UE or an XDD-UL period to be allocated to the UE. The base station may configure an initial bandwidth part allocated to the UE or a bandwidth part used as XDD-UL, as an MIB in an initial access stage. The operation of configuring or changing, based on the BWP information, the bandwidth is described in FIG. 3 in detail. However, the above-described information is a mere example, the disclosure is not limited thereto, and the base station may transmit information on the bandwidth or a bandwidth change indicator to the UE by using various types of signaling or parameters. In addition, according to various embodiments of the disclosure, each XDD-UL period is not limited to be indicated by a separate BWP, and all BWP information configured by the base station may also commonly include information on the same XDD-UL period. In addition, according to an embodiment, the base station may indicate to change the XDD-UL period regardless of the operation for a frequency change.

In operation 720, the base station may identify whether a change in the location of an XDD-UL resource (e.g., hereinafter, including a change or addition of the XDD-UL resource, or a change in the size of the XDD-UL resource) is necessary. According to an embodiment, the base station may identify that a frequency band used by the UE is unavailable so as to identify whether a change of an XDD-UL period is necessary. According to an embodiment, the base station may identify, based on information on the frequency band, received from the UE, or a result identified by the base station itself, that the frequency band is unavailable. In addition, the base station may also identify whether the change of the XDD-UL period is necessary according to a change of an active BWP of the UE. According to an embodiment, the base station may identify whether the change of the XDD-UL period is necessary according to a trigger of a predetermined event (a change of a BWP configuration of the UE, a change of an available frequency band of the UE, a case where a channel quality is equal to or less than a threshold value, etc.). According to an embodiment, the base station may receive information (e.g., a channel quality indicator (CQI), etc.) on a period preferred by the UE from the UE, and identify, based on the received information, whether the change of the XDD-UL period is necessary.

According to an embodiment, the base station may identify whether the change of the XDD-UL period is necessary according to a request of the UE. For example, the UE may identify whether the change of the XDD-UL period is necessary, and request, based on the identification, the change of the XDD-UL period from the base station. The base station may receive a message about the change of the XDD-UL period of the UE, and identify, based on the received message, whether the change of the XDD-UL period is necessary. According to an embodiment, the UE may identify, based on various reasons including a case where an initially configured XDD-UL period is identified to be unavailable, a case where a channel quality in the configured XDD-UL period deteriorates, etc., whether the change of the XDD-UL period is necessary. When pre-configured criteria related to the above-described reasons are satisfied, the UE may request a change to a new XDD-UL period from the base station. The UE may identify that the allocated XDD-UL period is included in an unavailable frequency area, and may request a configuration for a new XDD-UL period from the base station. A message for requesting the configuration for the new XDD-UL period from the base station by the UE may include information such as an unavailable frequency band and an available frequency band. According to an embodiment, the UE may transmit information on used XDD-UL or information on a used bandwidth to the base station, and the base station may identify, based on the information, whether the change of the XDD-UL period is necessary. When the base station identifies that the change of the XDD-UL period is necessary or when the UE requests the change of the XDD-UL period from the base station and the base station identifies that the change of the XDD-UL period is necessary, operation 730 may be performed.

In operation 730, the base station may transmit the resource configuration information including XDD-UL to be changed to the UE. Specifically, the base station may transmit information on an XDD-UL period to be changed to the UE. The information on the XDD-UL period to be changed, the information being transmitted by the base station, may include at least one of resource information relating to the XDD-UL period to be changed or an indicator for the XDD-UL period to be changed. According to an embodiment, the base station may configure resource information of XDD for the UE via higher-layer (e.g., radio resource control (RRC)) signaling. The resource information of XDD configured by the base station may include resource information relating to at least one of a start symbol and an end symbol of the changed XDD-UL resource, a start symbol of the changed XDD-UL resource and the number of consecutive symbols used as XDD-UL from the start symbol, or an application time point of the changed XDD-UL resource. According to an embodiment, the base station may configure an indicator for XDD via at least one of system information including cell-specific configuration information, UE-dedicated higher-layer signaling, a medium access control-control element (MAC-CE), or downlink control information (DCI). However, according to various embodiments, the disclosure is not limited thereto, and the base station may configure the indicator for XDD for the UE via various types of signaling.

According to an embodiment, the base station may configure information on a new XDD-UL period for the UE. The base station may configure, based on the above-described XDD-UL indicator resource or information of the changed XDD-UL, the changed XDD-UL period for the UE.

According to an embodiment, when the base station configures multiple XDD-UL candidate periods for the UE in advance, information on the resource of the new XDD-UL period may be pre-configured for the UE, and thus the base station may transmit an XDD-UL indicator indicating one of one or more XDD-UL candidate periods to the UE.

According to an embodiment, the base station may indicate, based on information on BWP, the change of the XDD-UL period. Referring to FIG. 710, the base station may configure, based on first BWP information, information on the entire bandwidth available to the UE, for the UE. In addition, the base station may configure, based on second BWP information, a period for a band used as XDD-UL. When an unavailable band is identified among frequency bands used by the UE and the change of the XDD-UL period is necessary (e.g., when the UE requests the change of the XDD-UL period), the base station may identify a period for a band used as the changed XDD-UL by using third BWP information. When the change of the XDD-UL period is necessary, the base station may indicate the change of the XDD-UL period by transmitting the identified third BWP information or the bandwidth part indicator information to the UE.

According to an embodiment, when the base station configures multiple XDD-UL candidate periods for the UE in advance, the information on the resource of the new XDD-UL period may be configured for the UE in advance, and thus when the change of the XDD-UL period is necessary (e.g., when the UE requests the change of the XDD-UL period), the base station may identify a period for a band used as the changed XDD-UL among the XDD-UL candidate periods. When the change of the XDD-UL period is necessary, the base station may indicate the change of the XDD-UL period by transmitting indicator information indicating the period for the identified XDD-UL band to the UE.

The operation of configuring or changing, based on BWP information, a bandwidth is described in FIG. 3 in detail. Specifically, the base station may transmit BWP configuration information for configuring at least one BWP to the UE. The BWP configuration information may include mapping information of at least one BWP mapped to each XDD-UL period. As described in FIG. 3 in detail, according to an embodiment, the base station may configure an initial bandwidth part allocated to the UE and a bandwidth part used as XDD-UL, or bandwidth parts of the XDD-UL candidate periods used as XDD-UL as an MIB in an initial access stage. According to an embodiment, the base station may indicate, based on DCI scheduling a PDSCH or a PUSCH, the changed XDD-UL period. However, the above-described information is a mere example, the disclosure is not limited thereto, and the base station may transmit information on a bandwidth or a bandwidth changed indicator to the UE by using various types of signaling or parameters.

According to an embodiment, an active BWP configured for the UE may be changed by the change of the XDD-UL period. For example, when the allocated XDD-UL period is changed to a new XDD-UL period for a predetermined reason, the active BWP may be also changed to a period corresponding to the new XDD-UL period. The change of the active BWP may include deactivation of an active BWP and activation of the deactivated BWP.

In operation 740, the base station may receive, based on the changed XDD-UL configuration information configured for the UE, an uplink signal. However, this is a mere example, and when a change of an XDD-DL period is made, the base station may transmit, based on the changed XDD-DL information configuration configured for the UE, a downlink signal.

Although not shown in FIG. 7A, the base station may identify whether information on XDD-UL is received from the UE. In addition to a case where the XDD-UL fails to be received, in a case where whether the XDD-UL is received fails to be identified, or a case where retransmission is required, information on the changed XDD-UL may be retransmitted.

Referring to FIG. 7A, respective operations illustrated in the drawing are not necessarily be performed according to the illustrated sequence, and the sequence of performing the respective operations may be changed or the respective operations may be omitted.

According to various embodiments of the disclosure, the change of the XDD-UL period may all include addition of an XDD-UL period, a change in the size of the XDD-UL period, or replacement of the configured XDD-UL period with another period. For example, the operations of FIG. 7A are not limited to the change of the XDD-UL period itself, and may be performed for addition of the XDD-UL period or the change in the size of the XDD-UL period. According to an embodiment, the base station may identify whether to add the XDD-UL period or change the size thereof. According to an embodiment, by performing an operation substantially similar to the above-described contents, the base station may indicate the addition of XDD-UL or the change in the size of XDD-UL to the UE. According to an embodiment, the base station may identify to maintain the XDD-UL period and may indicate to maintain the XDD-UL period to the UE, based on additional criterion, in addition to the above-described criteria.

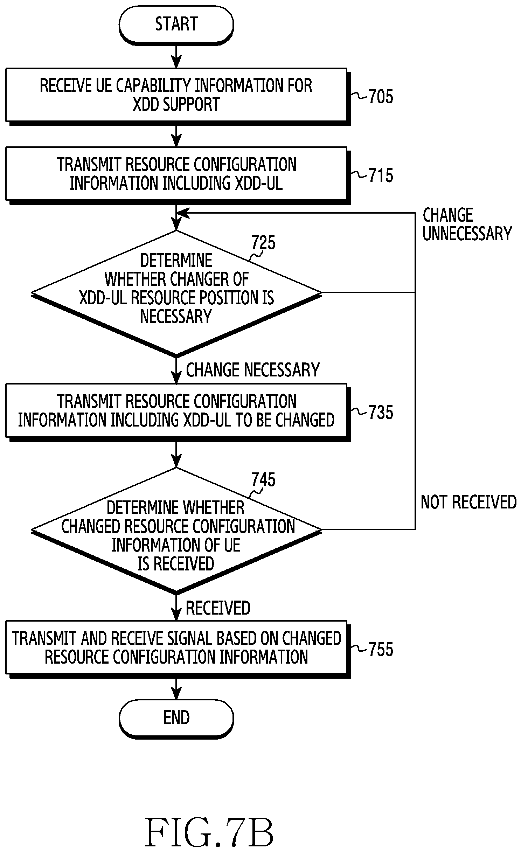

FIG. 7B is a detailed flow chart illustrating an operation of a base station for signal transmission and reception based on a changed XDD period according to various embodiments of the disclosure. According to various embodiments of the disclosure, FIG. 7B illustrates an operation in which XDD-UL is configured in a time domain to which DL is allocated in a TDD system, but the disclosure is not limited thereto, and an operation in which XDD-DL is configured in a time domain to which UL is allocated may be also performed.

In operation 705, the base station may receive UE capability information for XDD support. Specifically, the base station may transmit and receive signals to and from multiple UEs, and only some of the multiple UEs may correspond to UEs supporting an XDD system. When the UE with which the base station performs transmission and reception does not support the XDD system, transmission or reception of information on XDD may cause unnecessary waste for the base station, and thus the base station may need to identify a UE supporting XDD by receiving UE capability information for XDD support. The base station may receive UE capability information for XDD support from the UE supporting XDD via higher-layer signaling, but the disclosure is not limited thereto, and the base station may receive the UE capability information via various types of signaling or parameters.

In operation 715, the base station may transmit resource configuration information including information on an XDD-UL period to the UE. According to an embodiment, the base station may configure resource information of XDD for the UE via higher-layer (e.g., radio resource control (RRC)) signaling. The resource information of XDD configured by the base station may include resource information relating to at least one of a start symbol and an end symbol of an XDD-UL resource, a start symbol of the XDD-UL resource and the number of consecutive symbols used as XDD-UL from the start symbol, or an application time point of the XDD-UL resource. According to an embodiment, the resource configuration information configured for the UE by the base station may include information on multiple XDD-UL candidate periods.

According to an embodiment, the base station may configure, based on BWP information, the information on XDD for the UE. Specifically, the base station may transmit BWP configuration information for configuring at least one bandwidth part to the UE. The BWP configuration information may include mapping information of at least one BWP mapped to each XDD-UL period. The base station may configure, based on first BWP information, information on the entire bandwidth available to the UE for the UE, and may configure, based on different pieces of BWP information, information on multiple XDD-UL candidate periods to be allocated to the UE or an XDD-UL period to be allocated to the UE. The base station may configure an initial bandwidth part allocated to the UE or a bandwidth part used as XDD-UL, as an MIB in an initial access stage. The operation of configuring or changing, based on the BWP information, the bandwidth is described in FIG. 3 in detail. However, the above-described information is a mere example, the disclosure is not limited thereto, and the base station may transmit information on the bandwidth or a bandwidth change indicator to the UE by using various types of signaling or parameters. In addition, according to various embodiments of the disclosure, each XDD-UL period is not limited to be indicated by a separate BWP, and all BWP information configured by the base station may also commonly include information on the same XDD-UL period. In addition, according to an embodiment, the base station may indicate to change the XDD-UL period regardless of the operation for a frequency change.

In operation 725, the base station may identify whether a change in the location of an XDD-UL resource is necessary. Specifically, the base station may identify that a frequency band used by the UE is unavailable so as to identify whether a change of an XDD-UL period is necessary. According to an embodiment, the base station may identify, based on information on the frequency band, received from the UE, or a result identified by the base station itself, that the frequency band is unavailable. In addition, the base station may also identify whether the change of the XDD-UL period is necessary according to a change of an active BWP of the UE. According to an embodiment, the base station may identify whether the change of the XDD-UL period is necessary according to a trigger of a predetermined event (a change of a BWP configuration of the UE, a change of an available frequency band of the UE, a case where a channel quality is equal to or less than a threshold value, etc.). According to an embodiment, the base station may receive information (e.g., a channel quality indicator (CQI), etc.) on a period preferred by the UE from the UE, and identify, based on the received information, whether the change of the XDD-UL period is necessary. According to an embodiment, the base station may identify whether the change of the XDD-UL period is necessary according to a request of the UE. For example, the UE may identify whether the change of the XDD-UL period is necessary, and request, based on the identification, the change of the XDD-UL period from the base station. The base station may receive a message about the change of the XDD-UL period of the UE, and identify, based on the received message, whether the change of the XDD-UL period is necessary. According to an embodiment, the UE may identify, based on various reasons including a case where an initially configured XDD-UL period is identified to be unavailable, a case where a channel quality in the configured XDD-UL period deteriorates, etc., whether the change of the XDD-UL period is necessary. When pre-configured criteria related to the above-described reasons are satisfied, the UE may request a change to a new XDD-UL period from the base station. The UE may identify that the allocated XDD-UL period is included in an unavailable frequency area, and may request a configuration for a new XDD-UL period from the base station. A message for requesting the configuration for the new XDD-UL period from the base station by the UE may include information such as an unavailable frequency band and an available frequency band.

According to an embodiment, the UE may transmit information on used XDD-UL or information on a used bandwidth to the base station, and the base station may identify, based on the information, whether the change of the XDD-UL period is necessary. When the base station identifies that the change of the XDD-UL period is necessary or when the UE requests the change of the XDD-UL period from the base station and the base station identifies that the change of the XDD-UL period is necessary, operation 735 may be performed.

According to an embodiment, an active BWP configured for the UE may be changed by the change of the XDD-UL period. For example, when the allocated XDD-UL period is changed to a new XDD-UL period for a predetermined reason, the active BWP may be also changed to a period corresponding to the new XDD-UL period. The change of the active BWP may include deactivation of an active BWP and activation of the deactivated BWP.

In operation 735, the base station may transmit the resource configuration information including XDD-UL to be changed to the UE. Specifically, the base station may transmit information on an XDD-UL period to be changed to the UE. The information on the XDD-UL period to be changed, the information being transmitted by the base station, may include at least one of resource information relating to the XDD-UL period to be changed or an indicator for the XDD-UL period to be changed. According to an embodiment, the base station may configure resource information of XDD for the UE via higher-layer (e.g., radio resource control (RRC)) signaling. The resource information of XDD configured by the base station may include resource information relating to at least one of a start symbol and an end symbol of the changed XDD-UL resource, a start symbol of the changed XDD-UL resource and the number of consecutive symbols used as XDD-UL from the start symbol, or an application time point of the changed XDD-UL resource. According to an embodiment, the base station may configure an indicator for XDD via at least one of system information including cell-specific configuration information, UE-dedicated higher-layer signaling, a medium access control-control element (MAC), or downlink control information (DCI). However, according to various embodiments, the disclosure is not limited thereto, and the base station may configure the indicator for XDD for the UE via various types of signaling.

According to an embodiment, the base station may configure information on a new XDD-UL period for the UE. The base station may configure, based on the above-described XDD-UL indicator resource or information of the changed XDD-UL, the changed XDD-UL period for the UE.

According to an embodiment, when the base station configures multiple XDD-UL candidate periods for the UE in advance, information on the resource of the new XDD-UL period may be pre-configured for the UE, and thus the base station may transmit an XDD-UL indicator indicating one of one or more XDD-UL candidate periods to the UE.

According to an embodiment, the base station may indicate, based on information on BWP, the change of the XDD-UL period. Referring to FIG. 715, the base station may configure, based on first BWP information, information on the entire bandwidth available to the UE, for the UE. In addition, the base station may configure, based on second BWP information, a period for a band used as XDD-UL. When an unavailable band is identified among frequency bands used by the UE and the change of the XDD-UL period is necessary (e.g., when the UE requests the change of the XDD-UL period), the base station may identify a period for a band used as the changed XDD-UL by using third BWP information. When the change of the XDD-UL period is necessary, the base station may indicate the change of the XDD-UL period by transmitting the identified third BWP information or the bandwidth part indicator information to the UE.

According to an embodiment, when the base station configures multiple XDD-UL candidate periods for the UE in advance, the information on the resource of the new XDD-UL period may be configured for the UE in advance, and thus when the change of the XDD-UL period is necessary (e.g., when the UE requests the change of the XDD-UL period), the base station may identify a period for a band used as the changed XDD-UL among the XDD-UL candidate periods. When the change of the XDD-UL period is necessary, the base station may indicate the change of the XDD-UL period by transmitting indicator information indicating the period for the identified XDD-UL band to the UE.

The operation of configuring or changing, based on BWP information, a bandwidth is described in FIG. 3 in detail. Specifically, the base station may transmit BWP configuration information for configuring at least one BWP to the UE. The BWP configuration information may include mapping information of at least one BWP mapped to each XDD-UL period. As described in FIG. 3 in detail, according to an embodiment, the base station may configure an initial bandwidth part allocated to the UE and a bandwidth part used as XDD-UL, or bandwidth parts of the XDD-UL candidate periods used as XDD-UL as an MIB in an initial access stage. According to an embodiment, the base station may indicate, based on DCI scheduling a PDSCH or a PUSCH, the changed XDD-UL period. However, the above-described information is a mere example, the disclosure is not limited thereto, and the base station may transmit information on a bandwidth or a bandwidth changed indicator to the UE by using various types of signaling or parameters.

In operation 745, the base station may identify whether information on XDD-UL is received from the UE. Specifically, the UE may identify whether there is a change in configuration information of XDD-UL by the indication of the base station. When the UE identifies that there is a change in the XDD-UL configuration information, the UE may transmit whether there is a change in the XDD-UL configuration information to the base station. When the base station identifies whether there is a change in the XDD-UL configuration information of the UE, operation 755 may be performed. In addition to the case where the XDD-UL fails to be received from the UE by the base station, in a case where whether the XDD-UL is received fails to be identified, operation 725 may be performed. Alternatively, when retransmission of the XDD-UL information is required, information related to the changed XDD-UL may be retransmitted.

In operation 755, the base station may receive, based on the changed XDD-UL configuration information configured for the UE, an uplink signal. However, this is a mere example, and when a change of an XDD-DL period is made, the base station may transmit, based on the changed XDD-DL configuration information configured for the UE, a downlink signal.

Referring to FIG. 7B, respective operations illustrated in the drawing are not necessarily be performed according to the illustrated sequence, and the sequence of performing the respective operations may be changed or the respective operations may be omitted.

According to various embodiments of the disclosure, the change of the XDD-UL period may all include addition of an XDD-UL period, a change in the size of the XDD-UL period, or replacement of the configured XDD-UL period with another period. For example, the operations of FIG. 7B are not limited to the change of the XDD-UL period itself, and may be performed for addition of the XDD-UL period or the change in the size of the XDD-UL period. According to an embodiment, the base station may identify whether to add the XDD-UL period or change the size thereof. According to an embodiment, by performing an operation substantially similar to the above-described contents, the base station may indicate the addition of XDD-UL or the change in the size of XDD-UL to the UE. According to an embodiment, the base station may identify to maintain the XDD-UL period and may indicate to maintain the XDD-UL period to the UE, based on additional criterion, in addition to the above-described criteria.

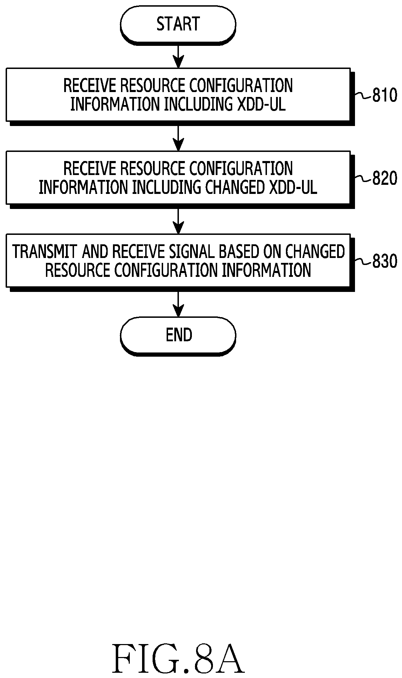

FIG. 8A is a flow chart illustrating an operation of a UE for signal transmission and reception based on a changed XDD period according to various embodiments of the disclosure. According to various embodiments of the disclosure, FIG. 8A illustrates an operation in which XDD-UL is configured in a time domain to which DL is allocated in a TDD system, the disclosure is not limited thereto, and an operation in which XDD-DL is configured in a time domain to which UL is allocated may be also performed.

In operation 810, the UE may receive resource configuration information including information on an XDD-UL period from the base station. According to an embodiment, the UE may receive a configuration of resource information of XDD from the base station via higher-layer (e.g., radio resource control (RRC)) signaling. The resource information for XDD, configured by the base station, may include resource information relating to at least one of a start symbol and an end symbol of an XDD-UL resource, a start symbol of the XDD-UL resource and the number of consecutive symbols used as XDD-UL from the start symbol, or an application time point of the XDD-UL resource. According to an embodiment, the resource configuration information configured for the UE by the base station may include information on multiple XDD-UL candidate periods.

According to an embodiment, the UE may receive, based on BWP information, a configuration of information on XDD from the base station. Specifically, the UE may receive BWP configuration information for configuring at least one BWP from the base station. The BWP configuration information may include mapping information of at least one BWP mapped to each XDD-UL period. The base station may configure, based on first BWP information, information on the entire bandwidth available to the UE for the UE, and may configure, based on different pieces of BWP information, information on multiple XDD-UL candidate periods to be allocated to the UE or an XDD-UL period to be allocated to the UE. The base station may configure an initial bandwidth part allocated to the UE or a bandwidth part used as XDD-UL, as an MIB in an initial access stage. The operation of configuring or changing, based on the BWP information, the bandwidth is described in FIG. 3 in detail. However, the above-described information is a mere example, the disclosure is not limited thereto, and the base station may transmit information on the bandwidth or a bandwidth change indicator to the UE by using various types of signaling or parameters. In addition, according to various embodiments of the disclosure, each XDD-UL period is not limited to be indicated by a separate BWP, and all BWP information configured by the base station may also commonly include information on the same XDD-UL period. In addition, according to an embodiment, the base station may indicate to change the XDD-UL period regardless of the operation for a frequency change.

Although not shown in FIG. 8A, the UE may identify whether a change of an XDD-UL period is necessary, and may request, based on the identification, the XDD-UL period change from the base station. The base station may receive a message about the XDD-UL period change of the UE, and may identify, based on the received message, whether the change of the XDD-UL period is necessary. According to an embodiment, the UE may identify, based on various reasons including a case where an initially configured XDD-UL period is identified to be unavailable, a case where a channel quality in the configured XDD-UL period deteriorates, etc., whether the change of the XDD-UL period is necessary. When pre-configured criteria related to the above-described reasons are satisfied, the UE may request a change to a new XDD-UL period from the base station. The UE may identify that the allocated XDD-UL period is included in an unavailable frequency area, and may request a configuration for a new XDD-UL period from the base station. A message for requesting the configuration for the new XDD-UL period from the base station by the UE may include information such as an unavailable frequency band and an available frequency band. According to an embodiment, the UE may transmit information on used XDD-UL or information on a used bandwidth to the base station, and the base station may identify, based on the information, whether the change of the XDD-UL period is necessary.

In operation 820, the UE may receive the resource configuration information including XDD-UL to be changed from the base station. Specifically, the UE may receive information on an XDD-UL period to be changed from the base station as the change of the XDD-UL period is necessary. The information on the XDD-UL period to be changed, the information being received by the UE, may include at least one of resource information relating to the XDD-UL period to be changed or an indicator for the XDD-UL period to be changed. According to an embodiment, the UE may receive a configuration of resource information of XDD from the base station via higher-layer (e.g., radio resource control (RRC)) signaling. The resource information of XDD configured by the base station may include resource information relating to at least one of a start symbol and an end symbol of the changed XDD-UL resource, a start symbol of the changed XDD-UL resource and the number of consecutive symbols used as XDD-UL from the start symbol, or an application time point of the changed XDD-UL resource. According to an embodiment, the base station may configure an indicator for XDD via at least one of system information including cell-specific configuration information, UE-dedicated higher-layer signaling, a medium access control-control element (MAC), or downlink control information (DCI). However, according to various embodiments, the disclosure is not limited thereto, and the base station may configure the indicator for XDD for the UE via various types of signaling.

According to an embodiment, the UE may receive a configuration of information on a new XDD-UL period from the base station. The base station may configure, based on the above-described XDD-UL indicator resource or information of the changed XDD-UL, the changed XDD-UL period for the UE.

According to an embodiment, when the base station configures multiple XDD-UL candidate periods for the UE in advance, information on the resource of the new XDD-UL period may be pre-configured for the UE, and thus the base station may transmit an XDD-UL indicator indicating one of one or more XDD-UL candidate periods to the UE.

According to an embodiment, the base station may indicate, based on information on BWP, the change of the XDD-UL period. Referring to FIG. 810, the UE may receive, based on first BWP information, a configuration information on the entire bandwidth available to the UE, from the UE. In addition, the UE may receive, based on second BWP information, a configuration of a period for a band used as XDD-UL. When an unavailable band is identified among frequency bands used by the UE and the change of the XDD-UL period is necessary (e.g., when the UE requests the change of the XDD-UL period), the base station may identify a period for a band used as the changed XDD-UL by using third BWP information. When the change of the XDD-UL period is necessary, the base station may indicate the change of the XDD-UL period by transmitting the identified third BWP information or the bandwidth part indicator information to the UE.

According to an embodiment, when the base station configures multiple XDD-UL candidate periods for the UE in advance, the information on the resource of the new XDD-UL period may be configured for the UE in advance, and thus when the change of the XDD-UL period is necessary (e.g., when the UE requests the change of the XDD-UL period), the base station may identify a period for a band used as the changed XDD-UL among the XDD-UL candidate periods. When the change of the XDD-UL period is necessary, the base station may indicate the change of the XDD-UL period by transmitting indicator information indicating the period for the identified XDD-UL band to the UE.

The operation of configuring or changing, based on BWP information, a bandwidth is described in FIG. 3 in detail. As described in FIG. 3 in detail, according to an embodiment, the UE may receive a configuration of an initial bandwidth part allocated from the base station and a bandwidth part used as XDD-UL, or bandwidth parts of the XDD-UL candidate periods used as XDD-UL as an MIB in an initial access stage. According to an embodiment, the base station may indicate, based on DCI scheduling a PDSCH or a PUSCH, the changed XDD-UL period. However, the above-described information is a mere example, the disclosure is not limited thereto, and the base station may transmit information on a bandwidth or a bandwidth changed indicator to the UE by using various types of signaling or parameters.

According to an embodiment, an active BWP configured for the UE may be changed by the change of the XDD-UL period. For example, when the allocated XDD-UL period is changed to a new XDD-UL period for a predetermined reason, the active BWP may be also changed to a period corresponding to the new XDD-UL period. The change of the active BWP may include deactivation of an active BWP and activation of the deactivated BWP.

In operation 830, the UE may transmit, based on the changed XDD-UL configuration information configured by the base station, an uplink signal. However, this is a mere example, and when a change of an XDD-DL period is made, the UE may receive, based on the changed XDD-DL configuration information configured from the base station, a downlink signal.

Although not shown in FIG. 8A, the base station may identify whether information on XDD-UL is received from the UE. In addition to a case where the XDD-UL fails to be received, in a case where whether the XDD-UL is received fails to be identified, or a case where retransmission is required, information on the changed XDD-UL may be retransmitted.

Referring to FIG. 8A, respective operations illustrated in the drawing are not necessarily be performed according to the illustrated sequence, and the sequence of performing the respective operations may be changed or the respective operations may be omitted.

According to various embodiments of the disclosure, the change of the XDD-UL period may all include addition of an XDD-UL period, a change in the size of the XDD-UL period, or replacement of the configured XDD-UL period with another period. For example, the operations of FIG. 8A are not limited to the change of the XDD-UL period itself, and may be performed for addition of the XDD-UL period or the change in the size of the XDD-UL period. According to an embodiment, the base station may identify whether to add the XDD-UL period or change the size thereof. According to an embodiment, by performing an operation substantially similar to the above-described contents, the base station may indicate the addition of XDD-UL or the change in the size of XDD-UL to the UE. According to an embodiment, the base station may identify to maintain the XDD-UL period and may indicate to maintain the XDD-UL period to the UE, based on additional criterion, in addition to the above-described criteria.

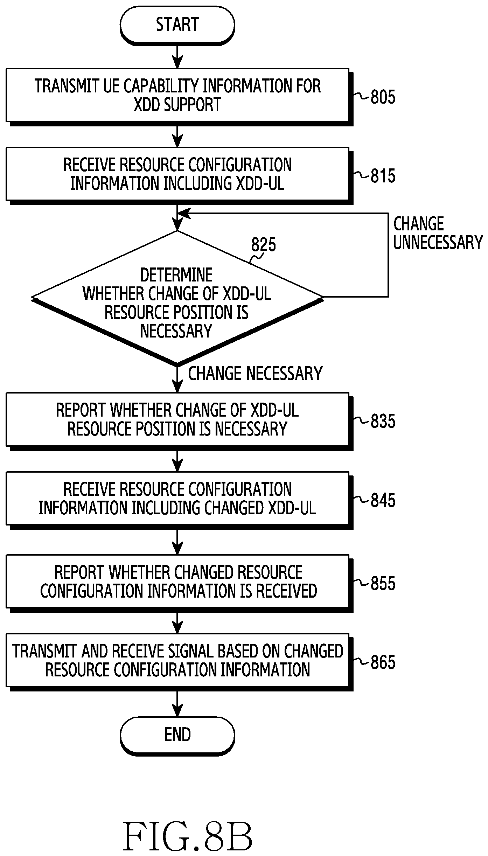

FIG. 8B is a detailed flow chart illustrating an operation of a UE for signal transmission and reception based on a changed XDD period according to various embodiments of the disclosure. According to various embodiments of the disclosure, FIG. 8B illustrates an operation in which XDD-UL is configured in a time domain to which DL is allocated in a TDD system, but the disclosure is not limited thereto, and an operation in which XDD-DL is configured in a time domain to which UL is allocated may be also performed.

In operation 805, the UE may transmit UE capability information for XDD support to the base station. Specifically, the base station may transmit and receive signals to and from multiple UEs, and only some of the multiple UEs may correspond to UEs supporting an XDD system. When the UE with which the base station performs transmission and reception does not support the XDD system, transmission or reception of information on XDD may cause unnecessary waste for the base station, and thus the base station may need to identify a UE supporting XDD by receiving UE capability information for XDD support. The UE supporting XDD may transmit UE capability information for XDD support to the base station via higher-layer signaling, but the disclosure is not limited thereto, and the UE may transmit the UE capability information via various types of signaling or parameters.

In operation 815, the UE may receive resource configuration information including information on an XDD-UL period from the base station. According to an embodiment, the UE may receive a configuration of resource information of XDD from the base station via higher-layer (e.g., radio resource control (RRC)) signaling. The resource information of XDD configured by the base station may include resource information relating to at least one of a start symbol and an end symbol of an XDD-UL resource, a start symbol of the XDD-UL resource and the number of consecutive symbols used as XDD-UL from the start symbol, or an application time point of the XDD-UL resource. According to an embodiment, the resource configuration information configured for the UE by the base station may include information on multiple XDD-UL candidate periods.

According to an embodiment, the UE may receive, based on BWP information, a configuration of the information on XDD from the base station. Specifically, the UE may receive BWP configuration information for configuring at least one bandwidth part from the base station. The BWP configuration information may include mapping information of at least one BWP mapped to each XDD-UL period. The UE may receive configuration, based on first BWP information, of information on the entire bandwidth available to the UE from the base station, and may receive configuration, based on different pieces of BWP information, information on multiple XDD-UL candidate periods to be allocated to the UE or an XDD-UL period to be allocated to the UE. The UE may receive a configuration of an initial bandwidth part allocated from the base station or a bandwidth part used as XDD-UL, as an MIB in an initial access stage. The operation of configuring or changing, based on the BWP information, the bandwidth is described in FIG. 3 in detail. However, the above-described information is a mere example, the disclosure is not limited thereto, and the UE may receive information on the bandwidth or a bandwidth change indicator from the base station by using various types of signaling or parameters. In addition, according to various embodiments of the disclosure, each XDD-UL period is not limited to be indicated by a separate BWP, and all BWP information configured by the base station may also commonly include information on the same XDD-UL period. In addition, according to an embodiment, the base station may indicate to change the XDD-UL period regardless of the operation for a frequency change.

In operation 825, the UE may identify whether a change in the location of an XDD-UL resource is necessary. Specifically, the UE may identify whether the change of the XDD-UL period is necessary, and request, based on the identification, the change of the XDD-UL period from the base station. The base station may receive a message for the change of the XDD-UL period of the UE, and identify, based on the received message, whether the change of the XDD-UL period is necessary. According to an embodiment, the UE may identify, based on various reasons including a case where an initially configured XDD-UL period is identified to be unavailable, a case where a channel quality in the configured XDD-UL period deteriorates, etc., whether the change of the XDD-UL period is necessary. In addition, according to an embodiment, the UE may notify the base station of a change of an active BWP. The base station may identify whether the change of the XDD-UL period is necessary according to the change of the active BWP. According to an embodiment, the base station may identify whether the change of the XDD-UL period is necessary according to a trigger of a predetermined event (a change of a BWP configuration of the UE, a change of an available frequency band of the UE, a case where a channel quality is equal to or less than a threshold value, etc.). When the UE identifies that the change of the XDD-UL period is necessary, operation 835 may be performed.

In operation 835, the UE may report whether the change in the location of the XDD-UL resource is necessary to the base station. Specifically, when pre-configured criteria related to the above-described reasons are satisfied, the UE may request a change to a new XDD-UL period from the base station. The UE may identify that the allocated XDD-UL period is included in an unavailable frequency area, and may request a configuration for a new XDD-UL period from the base station. A message for requesting the configuration for the new XDD-UL period from the base station by the UE may include information such as an unavailable frequency band and an available frequency band. According to an embodiment, the UE may transmit information on used XDD-UL or information on a used bandwidth to the base station, and the base station may identify, based on the information, whether the change of the XDD-UL period is necessary.

In operation 845, the UE may receive the resource configuration information including XDD-UL to be changed from the base station. Specifically, the UE may receive information on an XDD-UL period to be changed from the base station. The information on the XDD-UL period to be changed, the information being received by the UE, may include at least one of resource information relating to the XDD-UL period to be changed or an indicator for the XDD-UL period to be changed. According to an embodiment, the UE may receive a configuration of resource information of XDD from the base station via higher-layer (e.g., radio resource control (RRC)) signaling. The resource information of XDD configured by the base station may include resource information relating to at least one of a start symbol and an end symbol of the changed XDD-UL resource, a start symbol of the changed XDD-UL resource and the number of consecutive symbols used as XDD-UL from the start symbol, or an application time point of the changed XDD-UL resource. According to an embodiment, the base station may configure an indicator for XDD via at least one of system information including cell-specific configuration information, UE-dedicated higher-layer signaling, a medium access control-control element (MAC), or downlink control information (DCI). However, according to various embodiments, the disclosure is not limited thereto, and the UE may receive a configuration of the indicator for XDD from the base station via various types of signaling

According to an embodiment, the UE may receive a configuration of information on a new XDD-UL period from the base station. The base station may configure, based on the above-described XDD-UL indicator resource or information of the changed XDD-UL, the changed XDD-UL period for the UE.

According to an embodiment, when the base station configures multiple XDD-UL candidate periods for the UE in advance, information on the resource of the new XDD-UL period may be pre-configured for the UE, and thus the UE may receive an XDD-UL indicator indicating one of one or more XDD-UL candidate periods from the base station.

According to an embodiment, the base station may indicate, based on information on BWP, the change of the XDD-UL period. Referring to FIG. 815, the UE may receive, based on first BWP information, a configuration of information on the entire bandwidth available to the UE, from the base station. In addition, the UE may receive, based on second BWP information, a configuration of a period for a band used as XDD-UL. When an unavailable band is identified among frequency bands used by the UE and the change of the XDD-UL period is necessary (e.g., when the UE requests the change of the XDD-UL period), the base station may identify a period for a band used as the changed XDD-UL by using third BWP information. When the change of the XDD-UL period is necessary, the base station may indicate the change of the XDD-UL period by transmitting the identified third BWP information or the bandwidth part indicator information to the UE.

According to an embodiment, when the base station configures multiple XDD-UL candidate periods for the UE in advance, the information on the resource of the new XDD-UL period may be configured for the UE in advance, and thus when the change of the XDD-UL period is necessary (e.g., when the UE requests the change of the XDD-UL period), the base station may identify a period for a band used as the changed XDD-UL among the XDD-UL candidate periods. When the change of the XDD-UL period is necessary, the base station may indicate the change of the XDD-UL period by transmitting indicator information indicating the period for the identified XDD-UL band to the UE.

The operation of configuring or changing, based on BWP information, a bandwidth is described in FIG. 3 in detail. As described in FIG. 3 in detail, according to an embodiment, the UE may receive a configuration of an initial bandwidth part allocated to the UE and a bandwidth part used as XDD-UL, or bandwidth parts of the XDD-UL candidate periods used as XDD-UL as an MIB in an initial access stage. According to an embodiment, the base station may indicate, based on DCI scheduling a PDSCH or a PUSCH, the changed XDD-UL period. However, the above-described information is a mere example, the disclosure is not limited thereto, and the UE may receive information on a bandwidth or a bandwidth changed indicator from the base station by using various types of signaling or parameters.

According to an embodiment, an active BWP configured for the UE may be changed by the change of the XDD-UL period. For example, when the allocated XDD-UL period is changed to a new XDD-UL period for a predetermined reason, the active BWP may be also changed to a period corresponding to the new XDD-UL period. The change of the active BWP may include deactivation of an active BWP and activation of the deactivated BWP.

In operation 855, the UE may transmit whether information on XDD-UL is received to the base station. Specifically, the UE may identify whether there is a change in configuration information of XDD-UL by the indication of the base station. When the UE identifies that there is a change in the XDD-UL configuration information, the UE may transmit whether there is a change in the XDD-UL configuration information to the base station. Alternatively, when retransmission of the XDD-UL information is required, the base station may retransmit information related to the changed XDD-UL.

In operation 865, the UE may transmit, based on the changed XDD-UL configuration information, an uplink signal to the base station. However, this is a mere example, and when a change of an XDD-DL period is made, the UE may receive, based on the changed XDD-DL configuration information configured from the base station, a downlink signal.

Referring to FIG. 8B, respective operations illustrated in the drawing are not necessarily be performed according to the illustrated sequence, and the sequence of performing the respective operations may be changed or the respective operations may be omitted.

According to various embodiments of the disclosure, the change of the XDD-UL period may all include addition of an XDD-UL period, a change in the size of the XDD-UL period, or replacement of the configured XDD-UL period with another period. For example, the operations of FIG. 8B are not limited to the change of the XDD-UL period itself, and may be performed for addition of the XDD-UL period or the change in the size of the XDD-UL period. According to an embodiment, the base station may identify whether to add the XDD-UL period or change the size thereof. According to an embodiment, by performing an operation substantially similar to the above-described contents, the base station may indicate the addition of XDD-UL or the change in the size of XDD-UL to the UE. According to an embodiment, the base station may identify to maintain the XDD-UL period and may indicate to maintain the XDD-UL period to the UE, based on additional criterion, in addition to the above-described criteria.

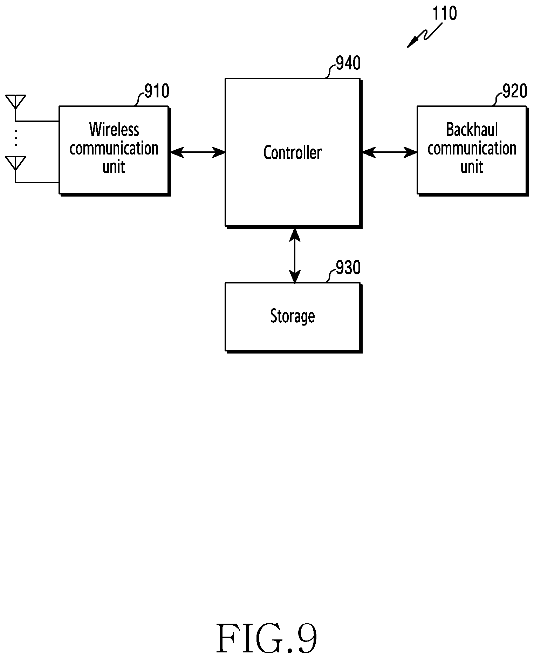

FIG. 9 illustrates a functional configuration of a base station in a wireless communication system according to various embodiments of the disclosure. The term "unit" or terms ending with suffixes "-er" and "-or" used below may refer to a unit processing at least one function or operation, and may be implemented by hardware, software, or a combination of hardware and software.

Referring to FIG. 9, a base station 110 may include a communication unit 910, a backhaul communication unit 920, a storage 930, and a controller 940.

The communication unit 910 performs functions for transmitting and receiving signals via a wireless channel. For example, the communication unit 910 performs a function of conversion between a baseband signal and a bit stream according to a physical layer standard of a system. For example, when transmitting data, the communication unit 910 generates complex symbols by encoding and modulating a transmission bit stream. In addition, when receiving data, the communication unit 910 restores a reception bit stream by demodulating and decoding a baseband signal. The communication unit 910 may be configured to perform an operation of a transmission UE or at least one of operations of a reception UE, described through FIGS. 1 to 10 above. According to an embodiment, the communication unit 910 may be configured to transmit a downlink signal to a UE 120, or receive an uplink signal from the UE 120.

In addition, the communication unit 910 may up-convert a baseband signal into a radio frequency (RF) band signal, and then may transmit the signal via an antenna, and may down-convert an RF band signal received via an antenna into a baseband signal. To this end, the communication unit 910 may include a transmission filter, a reception filter, an amplifier, a mixer, an oscillator, a digital to analog converter (DAC), an analog to digital converter (ADC), etc. In addition, the communication unit 910 may include multiple transmission and reception paths. Furthermore, the communication unit 910 may include at least one antenna array including multiple antenna elements. In terms of hardware, the communication unit 910 may include a digital unit and an analog unit, and the analog unit may include multiple sub-units according to operating power, an operation frequency, etc. According to an embodiment, the communication unit 910 may include a unit for forming a beam, i.e., a beamforming unit. For example, the communication unit 910 may include a massive MIMO unit (MMU) for beamforming.

The communication unit 910 may transmit and receive signals. To this end, the communication unit 910 may include at least one transceiver. For example, the communication unit 910 may transmit a synchronization signal, a reference signal, system information, a message, control information, data, or the like. In addition, the communication unit 910 may perform beamforming. The communication unit 910 may apply a beamforming weight to a signal to assign the directivity according to a configuration of the controller 940 to a signal to be transmitted and received. According to an embodiment, the communication unit 910 may generate a baseband signal according to a scheduling result and a transmission power calculation result. In addition, the RF unit in the communication unit 910 may transmit the generated signal through an antenna.

The communication unit 910 may transmit and receive signals as described above. Accordingly, all or a part of the communication unit 910 may be referred to as a "transmitter", a "receiver", or a "transceiver". In addition, in the description below, transmission and reception performed via a wireless channel are used as a meaning including performing the above-described processing by the communication unit 910.

The backhaul communication unit 920 provides an interface for communicating with other nodes in a network. That is, the backhaul communication unit 920 converts a bit stream to be transmitted from the base station 110 to another node, for example, another access node, another base station 110, a higher node, a core network, or the like, into a physical signal, and converts a physical signal transmitted from another node into a bit stream.

The storage 930 stores data such as a basic program, an application program, and configuration information for operations of the base station 110. The storage 930 may include a memory. The storage 930 may be configured by a volatile memory, a nonvolatile memory, or a combination of a volatile memory and a nonvolatile memory. In addition, the storage 930 provides stored data according to a request of the controller 940.

The controller 940 controls overall operations of the base station 110. For example, the controller 940 transmits and receives signals via the communication unit 910 or the backhaul communication unit 920. In addition, the controller 940 records and reads data in and from the storage 930. In addition, the controller 940 may perform functions of a protocol stack required by communication standards. To this end, the controller 940 may include at least one processor. According to various embodiments, the controller 940 may control the base station 110 to perform the above-described operations according to various embodiments. According to an embodiment, the controller 940 may estimate an uplink channel.

The elements of the base station 110 illustrated in FIG. 9 are merely provided as an example of the base station, and the example of the base station performing various embodiments of the disclosure is not limited to the elements illustrated in FIG. 9. That is, according to various embodiments, some elements may be added, deleted, and changed.

In FIG. 9, the base station is described as one entity, but as described above, the disclosure is not limited thereto. The base station 110 according to various embodiments of the disclosure may be implemented to form an access network having distributed deployment as well as integrated deployment (e.g., an eNB of LTE). As illustrated to describe the embodiments of FIGS. 1 to 10, the base station is divided into a central unit (CU) and a digital unit (DU), and the CU may be implemented to perform upper layers (e.g., packet data convergence protocol (PDCP) and RRC) and the DU may be implemented to perform lower layers (e.g., medium access control (MAC) and physical (PHY)).

As such, the base station having the distributed deployment may further include a configuration for fronthaul interface communication. According to an embodiment, the base station, as the DU, may perform functions for transmitting and receiving a signal in a wired communication environment. The DU may include a wired interface for controlling a direct connection between a device and a device through a transmission medium (e.g., copper wire, optical fiber). For example, the DU may transmit an electrical signal to another device through a copper wire, or perform conversion between an electrical signal and an optical signal. The DU may be connected to the CU having the distributed deployment. However, this description is not construed to exclude a scenario in which the DU is connected to the CU over a wireless network. In addition, the DU may be additionally connected to a radio unit (RU). However, this description is not construed to exclude a wireless environment including only the CU and the DU.

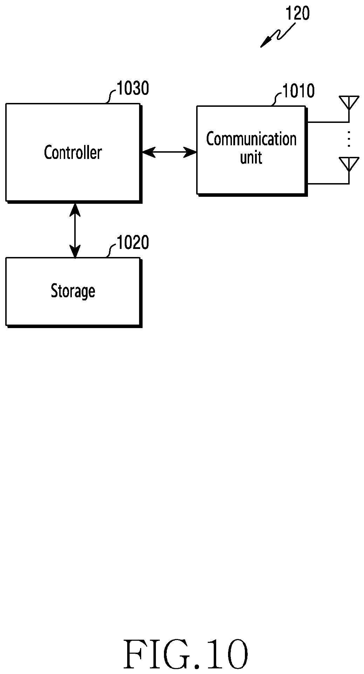

FIG. 10 illustrates a functional configuration of a UE in a wireless communication system according to various embodiments of the disclosure. The term "unit" or terms ending with suffixes "-er" and "-or" used below may refer to a unit processing at least one function or operation, and may be implemented by hardware, software, or a combination of hardware and software.

Referring to FIG. 10, a UE 120 includes a communication 1010, a storage 1020, and a controller 1030.

The communication unit 1010 performs functions for transmitting or receiving a signal over a wireless channel. For example, the communication unit 1010 performs a conversion function between a baseband signal and a bit stream according to a physical layer standard of a system. For example, when transmitting data, the communication unit 1010 generates complex symbols by encoding and modulating a transmission bit stream. In addition, when receiving data, the communication unit 1010 restores a reception bit stream by demodulating and decoding a baseband signal. The communication unit 1010 up-converts a baseband signal into an RF band signal and transmits the same via an antenna, and down-converts an RF band signal received through an antenna into a baseband signal. For example, the communication unit 1010 may include a transmission filter, a reception filter, an amplifier, a mixer, an oscillator, a digital to analog converter (DAC), an analog to digital converter (ADC), etc.

In addition, the communication unit 1010 may include multiple transmission and reception paths. Furthermore, the communication unit 1010 may include an antenna unit. The communication unit 1010 may include at least one antenna array including multiple antenna elements. In terms of hardware, the communication unit 1010 may include a digital circuit and an analog circuit (e.g., a radio frequency integrated circuit (RFIC)). Here, the digital circuit and the analog circuit may be implemented in a single package. In addition, the communication unit 1010 may include multiple RF chains. The communication unit 1010 may perform beamforming. The communication unit 1010 may apply a beamforming weight to a signal to assign the directivity according to a configuration of the controller 1030 to a signal to be transmitted and received.

In addition, the communication unit 1010 may transmit and receive signals. To this end, the communication 1010 may include at least one transceiver. The communication 1010 may receive a downlink signal. The downlink signal may include a synchronization signal (SS), a reference signal (RS) (e.g., cell-specific reference signal (CRS) and a demodulation (DM)-RS), system information (e.g., an MIB, an SIB, remaining system information (RMSI), and other system information (OSI)), a configuration message, control information, downlink data, or the like. In addition, the communication unit 1010 may transmit an uplink signal. The uplink signal may include uplink control information (UCI), a random access-related signal (e.g., a random access preamble (RAP) (or message 1 (Msg1), message 3 (Msg3)), a reference signal (e.g., a sounding reference signal (SRS) or a DM-RS), a buffer status report (BSR), or the like. For example, the uplink control information may include at least one of a scheduling request (SR), ACK/NACK information of a hybrid acknowledge (HARQ) procedure, or channel state information (CSI). According to an embodiment, the communication 901 may receive uplink DMRS allocation information. In addition, the communication unit 901 may transmit an uplink DMRS symbol.

Specifically, the communication unit 1010 may include an RF processor and a baseband processor. The RF processor performs a function of transmitting or receiving a signal through a wireless channel, such as, band conversion and amplification of a signal. The RF processor up-converts a baseband signal provided from the baseband processor into a RF band signal and transmits the same through an antenna, and down-converts an RF band signal received through the antenna into a baseband signal. For example, the RF processor may include a transmission filter, a reception filter, an amplifier, a mixer, an oscillator, a digital-to-analog converter (DAC), an analog-to-digital converter (ADC), or the like. The UE 120 may include one or more antennas. The RF processor may include multiple RF chains. Moreover, the RF processor may perform beamforming. For the beamforming, the RF processor may adjust the phase and magnitude of a signal transmitted and received through multiple antennas or antenna elements.

The baseband processor performs a function of conversion between a baseband signal and a bit stream according to a physical layer standard of a system. For example, when transmitting data, the baseband processor generates complex symbols by encoding and modulating a transmission bit stream. In addition, when receiving data, the baseband processor restores a reception bit stream by demodulating and decoding a baseband signal provided from the RF processor. For example, according to an orthogonal frequency division multiplexing (OFDM) scheme, when transmitting data, the baseband processor generates complex symbols by encoding and modulating a transmission bit stream, maps the complex symbols to subcarriers, and performs an inverse fast Fourier transform (IFFT) operation and cyclic prefix (CP) insertion, thereby forming OFDM symbols. In addition, when receiving data, the baseband processor divides a baseband signal provided from the RF processor into units of OFDM symbols, restores signals mapped to subcarriers through a fast Fourier transform (FFT) operation, and then restores a reception bit stream through the demodulation and decoding.

The communication unit 1010 transmits and receives signals as described above. Accordingly, all or a part of the communication unit 1010 may be referred to as a "transmitter", a "receiver", or a "transceiver". Furthermore, in order to support different radio connection technologies, the communication unit 1010 may include multiple communication modules. In addition, in order to process signals of different frequency bands, the communication unit 1010 may include different communication modules. For example, the different radio access technologies may include a wireless LAN (e.g., IEEE 802.1x), a cellular network (e.g., LTE or NR), etc. In addition, the different frequency bands may include super high frequency (SHF) (e.g., 2.5 GHz or 5 GHz) band and millimeter wave (mmWave) (e.g., 60 GHz) band. In addition, the communication unit 1010 may use the same radio access technology on different frequency bands (e.g., an unlicensed band for licensed assisted access (LAA) or NR-unlicensed (U) and citizens broadband radio service (CBRS) (e.g., 3.5 GHz)).

The storage unit 1020 stores data such as a basic program, an application program, and configuration information for an operation of the UE 120. The storage unit 1020 may be configured by a volatile memory, a nonvolatile memory, or a combination of a volatile memory and a nonvolatile memory. The storage unit 1020 stores data such as a basic program, an application program, and configuration information for an operation of the UE 120.

The controller 1030 controls overall operations of the UE 120. For example, the controller 1030 transmits and receives signals via the communication unit 1010. In addition, the controller 1030 records and reads data in and from the storage 1020. In addition, the controller 1030 may perform functions of a protocol stack required by communication standards. To this end, the controller 1030 may include at least one processor. The controller 1030 may include at least one processor or a microprocessor, or may be a part of the processor. In addition, a part of the communication unit 1010 and the controller 1030 may be referred to as a "CP". The controller 1030 may include various modules for perform communication. According to various embodiments, the controller 1030 may control the UE to perform operations according to various embodiments described below.

The controller 1030 controls overall operations of the UE 120. For example, the controller 1030 transmits and receives a signal through the communication unit 1010. In addition, the controller 1030 records and reads data in and from the storage 1020. To this end, the controller 1030 may include at least one processor. For example, the controller 1030 may include a communication processor (CP) for performing control for communication and an application processor (AP) for controlling an upper layer such as an application program. According to various embodiments of the disclosure, the controller 1030 may be configured to perform a function of dynamic spectrum sharing. According to an embodiment, the controller 1030 may be configured such that the UE 120 dynamically uses an LTE cell and an NR cell in an EN-DC environment. In addition, according to an embodiment, the controller 1030 may be configured such that the UE 120 dynamically uses cells by two nodes in an MR-DC environment as well as the EN-DC environment. In addition, the controller 1030 may control the UE 120 to perform the above-described operations according to various embodiments.

According to various embodiments of the disclosure, a method performed by a base station supporting a time division duplex (TDD) system in a wireless communication system may include transmitting resource configuration information including a first cross division duplex-uplink (XDD-UL) period to a terminal, determining whether a change of the first XDD-UL period is necessary, identifying, based on a result of the determination, a second XDD-UL period, transmitting information on the second XDD-UL period to the terminal, and receiving, based on at least one of the first XDD-UL period or the second XDD-UL period, an uplink signal from the terminal.

According to an embodiment, the determining of whether the first XDD-UL period is necessary may include receiving a request for a change of the first XDD-UL period from the terminal, and determining, based on the request for the change, whether a change of the first XDD-UL period is necessary, wherein the request for the change of the first XDD-UL period includes information related to an XDD-UL period preferred by the terminal.

According to an embodiment, the determining of whether the change of the first XDD-UL period is necessary may include identifying whether there is a change of a bandwidth available to the terminal, and determining, based on a result of the identification, whether a change of the first XDD-UL period is necessary.

According to an embodiment, the resource configuration information may include resource configuration information of multiple candidate XDD-UL periods, and the transmitting of the information on the second XDD-UL period to the terminal may include transmitting an indicator for at least one XDD-UL period among the multiple candidate XDD-UL periods.

According to an embodiment, the method may further include transmitting bandwidth part (BWP) configuration information for configuring at least one BWP to the terminal, and the resource configuration information may include mapping information of the at least one BWP and at least one XDD-UL period including the first XDD-UL period, the second XDD-UL period, or at least one of the multiple candidate XDD-UL periods.

According to an embodiment, the determining of whether the change of the first XDD-UL period is necessary may include determining, based on whether the at least one BWP is activated, whether a change of the first XDD-UL period is necessary.

According to an embodiment, the determining of whether the change of the first XDD-UL period is necessary based on whether the at least one BWP is activated may include transmitting, to the terminal, a message indicating to deactivate a first BWP configured for the terminal and activate a second BWP, and identifying a change of a first XDD-UL period mapped to the first BWP to a second XDD-UL period mapped to the second BWP.

According to an embodiment, the method may further include receiving terminal capability information for XDD system support from the terminal, and identifying, based on the terminal capability information, whether the terminal supports an XDD system.

According to various embodiments of the disclosure, a method performed by a terminal supporting a time division duplex (TDD) system in a wireless communication system may include transmitting terminal capability information for XDD system support to a base station, receiving resource configuration information including a first cross division duplex-uplink (XDD-UL) period from the base station, receiving, from the base station, information on whether a change of the first XDD-UL period is necessary based on the resource configuration information, transmitting information for requesting the change of the first XDD-UL period to the base station, receiving, from the base station, information on a second XDD-UL period identified by the base station, and transmitting, based on at least one of the first XDD-UL period or the second XDD-UL period, an uplink signal to the base station, wherein the information for requesting the change of the first XDD-UL period may include information related to an XDD-UL period preferred by the terminal.

According to an embodiment, the resource configuration information may include resource configuration information for multiple candidate XDD-UL periods, and the receiving of the information on the second XDD-UL period from the base station may include receiving an indicator for at least one XDD-UL period among the multiple candidate XDD-UL periods.

According to an embodiment, the method may further include receiving, from the base station, bandwidth part (BWP) configuration information for configuring at least one BWP, and the resource configuration information may include mapping information of the at least one BWP and at least one XDD-UL period including the first XDD-UL period, the second XDD-UL period, or at least one of the multiple candidate XDD-UL periods.

According to an embodiment, the determining of whether the change of the first XDD-UL period is necessary may include determining, based on whether the at least one BWP is activated, whether a change of the first XDD-UL period is necessary.

According to an embodiment, the determining of whether the change of the first XDD-UL period is necessary, based on whether the at least one BWP is activated, may include receiving, from the base station, a message indicating to deactivate a first BWP configured for the terminal and active a second BWP, and changing a first XDD-UL period mapped to the first BWP to a second XDD-UL period mapped to the second BWP.

According to an embodiment, the method may further include transmitting terminal capability information for XDD system support to the base station.

According to various embodiments of the disclosure, a base station supporting a time division duplex (TDD) system in a wireless communication system may include at least one transceiver, and at least one processor functionally coupled to the at least one transceiver, wherein the at least one processor is configured to: transmit resource configuration information including a first cross division duplex-uplink (XDD-UL) period to a terminal, determine whether a change of the first XDD-UL period is necessary, identify, based on a result of the determination, a second XDD-UL period, transmit information on the second XDD-UL period to the terminal, and receive, based on at least one of the first XDD-UL period or the second XDD-UL period, an uplink signal from the terminal.

According to an embodiment, in order to determine whether the change of the first XDD-UL period is necessary, the at least one processor may be configured to determine whether a change of the first XDD-UL period is necessary based on a request for a change of the first XDD-UL period, the request being received from the terminal, wherein the request for the change of the first XDD-UL period may include information related to an XDD-UL period preferred by the terminal.

According to an embodiment, in order to determine whether the change of the first XDD-UL period is necessary, the at least one processor may be configured to identify whether there is a change of a bandwidth available to the terminal, and determine, based on a result of the identification, whether a change of the first XDD-UL period is necessary.

According to an embodiment, the resource configuration information may include resource configuration information of multiple candidate XDD-UL periods, and in order to transmit the information on the second XDD-UL period to the terminal, the at least one processor may be configured to transmit an indicator for at least one XDD-UL period among the multiple candidate XDD-UL periods.

According to an embodiment, the at least one processor may be further configured to transmit bandwidth part (BWP) configuration information for configuring at least one BWP to the terminal, wherein the resource configuration information may include mapping information of the at least one BWP and at least one XDD-UL period including the first XDD-UL period, the second XDD-UL period, or at least one of the multiple candidate XDD-UL periods.

According to an embodiment, in order to determine whether the change of the first XDD-UL period is necessary, the at least one processor may be configured to determine, based on whether the at least one BWP is activated, whether the change of the first XDD-UL period is necessary.

According to an embodiment, in order to determine, based on whether the at least one BWP is activated, whether the change of the first XDD-UL period is necessary, the at least one processor may be configured to transmit, to the terminal, a message indicating to deactivate a first BWP configured for the terminal and activate a second BWP, and identify a change of a first XDD-UL period mapped to the first BWP to a second XDD-UL period mapped to the second BWP.

According to an embodiment, the at least one processor may be further configured to receive terminal capability information for XDD system support from the terminal, and identify, based on the terminal capability information, whether the terminal supports an XDD system.

According to various embodiments of the disclosure, a terminal supporting a time division duplex (TDD) system in a wireless communication system may include at least one transceiver and at least one processor functionally coupled to the at least one transceiver, wherein the at least one processor is configured to transmit, to a base station, terminal capability information for XDD system support, receive resource configuration information including first cross division duplex-uplink (XDD-UL) period from the base station, receive, based on the resource configuration information, information on whether a change of the first XDD-UL period is necessary from the base station, transmit information for requesting the change of the first XDD-UL period to the base station, receive information on a second XDD-UL period identified by the base station from the base station, and transmit, based on at least one of the first XDD-UL period or the second XDD-UL period, an uplink signal to the base station, wherein the information for requesting the change of the first XDD-UL period includes information related to an XDD-UL period preferred by the terminal.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a base station supporting a time division duplex (TDD) system in a wireless communication system, the method comprising:
transmitting, to a terminal, resource configuration information comprising a first cross division duplex-uplink (XDD-UL) period;
determining whether a change of the first XDD-UL period is necessary;
identifying, based on a result of the determination, a second XDD-UL period;
transmitting, to the terminal, information on the second XDD-UL period; and
receiving, from the terminal, based on at least one of the first XDD-UL period or the second XDD-UL period, an uplink signal.

2. The method of claim 1, wherein the determining of whether the first XDD-UL period is necessary comprises:
receiving, from the terminal, a request for a change of the first XDD-UL period; and
determining, based on the request for the change, whether a change of the first XDD-UL period is necessary,
wherein the request for the change of the first XDD-UL period comprises information related to an XDD-UL period preferred by the terminal.

3. The method of claim 1, wherein the determining of whether the change of the first XDD-UL period is necessary comprises:
identifying whether there is a change of a bandwidth available to the terminal; and
determining, based on a result of the identification, whether a change of the first XDD-UL period is necessary.

4. The method of claim 1,
wherein the resource configuration information comprises resource configuration information for multiple candidate XDD-UL periods, and
wherein the transmitting of the information on the second XDD-UL period to the terminal comprises transmitting an indicator for at least one XDD-UL period among the multiple candidate

5. The method of claim 4, further comprising transmitting, to the terminal, bandwidth part (BWP) configuration information for configuring at least one BWP, and
wherein the resource configuration information comprises mapping information of the at least one BWP and at least one XDD-UL period comprising the first XDD-UL period, the second XDD-UL period, or at least one of the multiple candidate XDD-UL periods.

6. The method of claim 5, wherein the determining of whether the change of the first XDD-UL period is necessary comprises determining, based on whether the at least one BWP is activated, whether a change of the first XDD-UL period is necessary.

7. The method of claim 6, wherein the determining of whether the change of the first XDD-UL period is necessary, based on whether the at least one BWP is activated, comprises:
transmitting, to the terminal, a message indicating to deactivate a first BWP configured for the terminal and activate a second BWP; and
identifying a change of a first XDD-UL period mapped to the first BWP to a second XDD-UL period mapped to the second BWP.

8. The method of claim 1, further comprising:
receiving, from the terminal, terminal capability information regarding XDD system support; and
identifying, based on the terminal capability information, whether the terminal supports an XDD system.

9. A method performed by a terminal supporting a time division duplex (TDD) system in a wireless communication system, the method comprising:
transmitting, to a base station, terminal capability information regarding XDD system support;
receiving, from the base station, resource configuration information comprising a first cross division duplex-uplink (XDD-UL) period;
receiving, from the base station, information on whether a change of the first XDD-UL period is necessary, based on the resource configuration information;
transmitting, to the base station, information for requesting the change of the first XDD-UL period;
receiving, from the base station, information on a second XDD-UL period identified by the base station; and
transmitting, to the base station, based on at least one of the first XDD-UL period or the second XDD-UL period, an uplink signal,
wherein the information for requesting the change of the first XDD-UL period comprises information related to an XDD-UL period preferred by the terminal.

10. The method of claim 9,
wherein the resource configuration information comprises resource configuration information for multiple candidate XDD-UL periods, and
wherein the receiving of the information on the second XDD-UL period from the base station comprises receiving an indicator for at least one XDD-UL period among the multiple candidate XDD-UL periods.

11. The method of claim 10, further comprising receiving, from the base station, bandwidth part (BWP) configuration information for configuring at least one BWP,
wherein the resource configuration information comprises mapping information of the at least one BWP and at least one XDD-UL period comprising the first XDD-UL period, the second XDD-UL period, or at least one of the multiple candidate XDD-UL periods.

12. A base station supporting a time division duplex (TDD) system in a wireless communication system, the base station comprising:
at least one transceiver; and
at least one processor functionally coupled to the at least one transceiver,
wherein the at least one processor is configured to:
transmit, to a terminal, resource configuration information comprising a first cross division duplex-uplink (XDD-UL) period;
determine whether a change of the first XDD-UL period is necessary;
identify, based on a result of the determination, a second XDD-UL period;
transmit, to the terminal, information on the second XDD-UL period; and
receive, from the terminal, based on at least one of the first XDD-UL period or the second XDD-UL period, an uplink signal.

13. The base station of claim 12, wherein the at least one processor is configured to, in order to determine whether the change of the first XDD-UL period is necessary, determine whether a change of the first XDD-UL period is necessary, based on a request for a change of the first XDD-UL period, the request being received from the terminal, and
wherein the request for the change of the first XDD-UL period comprises information related to an XDD-UL period preferred by the terminal.

14. The base station of claim 12, wherein the at least one processor is configured to, in order to determine whether the change of the first XDD-UL period is necessary:
identify whether there is a change of a bandwidth available to the terminal; and
determine, based on a result of the identification, whether a change of the first XDD-UL period is necessary.

15. The base station of claim 12,
wherein the resource configuration information comprises resource configuration information for multiple candidate XDD-UL periods, and
wherein the at least one processor is configured to, in order to transmit the information on the second XDD-UL period to the terminal, transmit an indicator for at least one XDD-UL period among the multiple candidate XDD-UL periods.
